# EUROPEAN PATENT SPECIFICATION

(11) **EP 3 787 275 B1**
(45) Date of publication and mention of the grant of the patent: **09.08.2023**
(21) Application number: 19811746.7
(22) Date of filing: 29.03.2019
(51) Int. Cl.: H04N 23/50, H04M 1/02, H04N 23/54, H04N 23/56

(54) **IMAGING COMPONENT, ELECTRONIC COMPONENT, ELECTRONIC APPARATUS, AND CONTROL METHOD FOR ELECTRONIC APPARATUS**
ABBILDUNGSKOMPONENTE, ELEKTRONISCHE KOMPONENTE, ELEKTRONISCHE VORRICHTUNG UND VERFAHREN ZUR STEUERUNG EINER ELEKTRONISCHEN VORRICHTUNG
COMPOSANT D'IMAGERIE, COMPOSANT ÉLECTRONIQUE, APPAREIL ÉLECTRONIQUE, ET PROCÉDÉ DE COMMANDE POUR APPAREIL ÉLECTRONIQUE

(30) Priority: 02.06.2018 CN 201820849350 U; 02.06.2018 CN 201810560034; 02.06.2018 CN 201820849877 U
(43) Date of publication of application: 03.03.2021
(73) Proprietor: GUANGDONG OPPO MOBILE TELECOMMUNICATIONS CORP., LTD., Dongguan Guangdong 523860 (CN)
(72) Inventor: ZENG, Zanjian, Dongguan, Guangdong 523860 (CN); LI, Fuqin, Dongguan, Guangdong 523860 (CN); ZHAO, Bo, Dongguan, Guangdong 523860 (CN); LIN, Sicong, Dongguan, Guangdong 523860 (CN)
(74) Representative: Manitz Finsterwald Patent- und Rechtsanwaltspartnerschaft mbB
(86) International application number: PCT/CN2019/080434
(87) International publication number: WO 2019/228050

(56) References cited:
- CN-A- 102 762 069
- CN-A- 103 515 371
- CN-A- 106 790 833
- CN-A- 107 896 293
- CN-A- 107 968 864
- CN-A- 107 968 864
- CN-A- 107 968 864
- CN-A- 108 810 374
- CN-U- 207 218 938
- CN-U- 208 489 913
- CN-U- 208 489 917
- US-A1- 2011 024 627
- US-A1- 2018 131 923

## Description

### TECHNICAL FIELD

The present disclosure relates to the field of electronic devices, and in particularly, to a camera assembly and an electronic apparatus using the same.

### BACKGROUND

With development of technology and requirement of market, more and more mobile terminals are equipped with imaging apparatuses for face recognition. Face recognition can be used not only to unlock and wake up mobile terminals, but also to mobile payment, account login, etc., and are widely used because of their advantages of convenience and high security. However, the inventor, when using mobile terminals in the prior art to perform face recognition, discovered that an imaging apparatus for performing face recognition in the prior art is unable to recognize a face being very close to a mobile terminal.

CN107968864A discloses an output module and an electronic device. The output module includes a package housing, a structured light projector, and a proximity infrared lamp. The package housing includes a package substrate. The structured light projector and the proximity infrared lamp are packaged in the package housing and loaded on the package substrate. The structured light projector and the proximity infrared lamp can emit infrared light to the package housing at different power. The output module integrates the structured light projector and the proximity infrared lamp into a single package structure, and has functions of infrared light emission, infrared ranging and stereoscopic imaging. Therefore, the output module is highly integrated and small, and saves the space for achieving the functions of stereoscopic imaging and infrared ranging. In addition, as the structured light projector and the proximity infrared lamp are loaded on the same package substrate, the packaging efficiency is improved compared with the traditional technology in which the structured light projector and the proximity infrared lamp are manufactured by using different wafers and then combined on a PCB substrate for packaging.

US20180131923A1 provides an image capturing device includes a frame structure, a first image capturing unit, at least one second image capturing unit, and an infrared emitting unit, wherein the first image capturing unit, the second image capturing unit, and the infrared emitting unit are respectively disposed on the frame structure. The first image capturing unit and the infrared emitting unit form a structured light depth camera module, and the first image capturing unit and the second image capturing unit form a stereo light depth camera module.

CN107896293A discloses a camera component and a mobile terminal. The camera component comprises a frame body, wherein the frame body comprises a substrate, and a through hole close to a top edge of the substrate is formed in the substrate; a top wall extending from the top edge; and a lug boss extending from the substrate, wherein the lug boss is located on one side of the through hole, the lug boss comprises a locating surface facing to the center of the through hole and a mounting surface connected with the locating surface and deviating from the substrate, the lug boss, the top wall and the substrate enclose an evasion groove, and the evasion groove communicates with the through hole; and a camera module, wherein the camera module penetrates through the through hole and abuts against the mounting surface, the camera module and a side face of the through hole are arranged at intervals, and the camera module is in contact with the locating surface. In the camera component and the mobile terminal provided by the embodiment of the invention, when the top wall is applied with an impact force, the evasion groove can reduce the impact force directly transferred onto the camera module, so that optical axis deviation and other faults of the camera module can be avoided, and the normal work of the camera module can be guaranteed.

CN207218938U discloses a multi -functional 3D imaging module and mobile terminal, wherein multi -functional 3D imaging module includes 3D imaging Unit for acquire range image, including at least one projection unit and at least one acquisition unit, flat surface imaging unit for acquire the color image, perception detecting element for perception or detect outside environmental parameter is including the earphone unit that is used for sounding and the sensor of at least one, the support for fixed 3D imaging Unit, plane imaging Unit and perception detecting element form integrative collection moulding group, the support is equipped with and lets being used for of corresponding opening that light passes through and be used for the perception or detect outside environmental parameter's opening with perception detecting element corresponds with 3D imaging Unit, plane imaging Unit. The utility model discloses the well high 3D imaging module who can be used to mobile terminal of small, stability that has realized.

### SUMMARY OF THE DISCLOSURE

A purpose of the present disclosure is to provide a camera assembly and an electronic apparatus using the same with better reliability.

A camera assembly according to the invention is defined in claim 1. The camera assembly comprises a support, a depth device, a camera, and a projector; the depth device, the camera, and the projector are all disposed on the support, the depth device is spaced from the projector, a region of the support between the depth device and the projector is capable of being configured to dispose a first functional component, the projector is configured to project light, the depth device is configured to capture depth image information, and the camera is configured to capture color image information; the support has a connecting part, a first fixing part, and a second fixing part; the connecting part is configured to dispose the first functional component, the first fixing part and the second fixing part are respectively located at two opposite sides of the connecting part, both the depth device and the camera are fixed on the first fixing part, and the projector is fixed on the second fixing part.

An apparatus according to the invention is defined in claim 12. The electronic apparatus comprises a middle frame, a sliding base, a guiding mechanism, a driving mechanism, and the above-described camera assembly received in the sliding base; wherein, the middle frame defines an accommodating groove; the sliding base is slidably connected with the middle frame in the accommodating groove via the driving mechanism, the guiding mechanism is disposed between the sliding base and the middle frame, so that the sliding base extends out of or is received into the accommodating groove along a direction guided by the guiding mechanism under drive of the driving mechanism; the sliding base is provided with a first functional part, a second functional part, and a third functional part, the depth device captures the depth image information through the first functional part, the camera captures the color image information through the second functional part, and the projector projects through the third functional part.

### BRI EF DESCRIPTION OF THE DRAWINGS

In order to describe technical solutions of embodiments of the present disclosure more clearly, drawings required being used in the embodiments will be simply introduced below. Obviously, the drawings in the following description are merely some embodiments of the present disclosure. For one of ordinary skill in the art, it is also possible to obtain other drawings according to these drawings without paying any creative work.
FIG. 1 is a schematic view of an imaging assembly provided by an embodiment of the present disclosure.
FIG. 2 is a schematic view of an imaging assembly provided by an embodiment of the present disclosure in another visual angle.
FIG. 3 is a schematic view of an imaging assembly provided by an embodiment of the present disclosure in another visual angle.
FIG. 4 is a schematic view of another kind of second fixing part in the imaging assembly in FIG. 2.
FIG. 5 is a schematic view of an imaging assembly provided by another embodiment of the present disclosure.
FIG. 6 is a schematic view of an imaging assembly provided by another embodiment of the present disclosure in another visual angle.
FIG. 7 is a disassembled schematic view of the imaging assembly in FIG. 5.
FIG. 8 is a disassembled schematic view of the imaging assembly in FIG. 6.
FIG. 9 is a schematic view of another kind of second fixing part in the imaging assembly in FIG. 5.
FIG. 10 is a schematic view of an electronic assembly provided by an embodiment of the present disclosure.
FIG. 11 is a schematic view of an electronic assembly provided by another embodiment of the present disclosure.
FIG. 12 is a schematic view of an electronic assembly provided by another embodiment of the present disclosure in another visual angle.
FIG. 13 is a schematic view of an electronic apparatus provided by an embodiment of the present disclosure.
FIG. 14 is a schematic view of the electronic apparatus in FIG. 13 in another visual angle.
FIG. 15 is a schematic view of an electronic apparatus provided by another embodiment of the present disclosure in another visual angle.
FIG. 16 is a disassembled schematic view of the electronic apparatus in FIG. 13.
FIG. 17 is a schematic view of a driving mechanism and a guiding mechanism of the electronic apparatus in FIG. 13 in an extending state.
FIG. 18 is a schematic view of a driving mechanism and a guiding mechanism of the electronic apparatus in FIG. 13 in a retracting state.
FIG. 19 is a schematic view of another electronic apparatus provided by another embodiment of the present disclosure.
FIG. 20 is a schematic view of another electronic apparatus provided by another embodiment of the present disclosure.
FIG. 21 is a schematic flowchart of a method for controlling an electronic apparatus provided by an embodiment of the present disclosure.

### DETAILED DESCRIPTION

Technical solutions in embodiments of the present disclosure will be described clearly and completely below in accompany with drawings in embodiments of the present disclosure.

In the description of the embodiments of the present disclosure, it should be understood that orientations or positional relationships indicated by terms "length", "width", "thickness", "X direction", "Y direction", "Z direction" or the like are based on orientations or positional relationships shown in the drawings, and are only intended to facilitate describing the present disclosure and simplify the description, but not to imply or indicate that an indicated device or element must have a specific orientation or be constructed and operated in a specific orientation, and therefore cannot be construed as a limitation to the present disclosure.

According to one aspect of the present disclosure, a camera assembly is provided. The camera assembly comprises a support, a depth device, a camera, and a projector; the depth device, the camera, and the projector are all disposed on the support, the depth device is spaced from the projector, a region of the support between the depth device and the projector is capable of being configured to dispose a first functional component, the projector is configured to project light, the depth device is configured to capture depth image information, and the camera is configured to capture color image information; the support has a connecting part, a first fixing part, and a second fixing part; the connecting part is configured to dispose the first functional component, the first fixing part and the second fixing part are respectively located at two opposite sides of the connecting part, both the depth device and the camera are fixed on the first fixing part, and the projector is fixed on the second fixing part.

In some embodiments, the depth device or the camera is spaced from the projector by a spaced distance that is long enough to prevent light crosstalk from being generated between the depth device or the camera and the projector, and a region of the frame in the spaced distance is configured to dispose the first functional component.

In some embodiments, the camera assembly further comprises a fill-in light, the fill-in light is fixed on the support, and the fill-in light and the depth device are disposed adjacently.

In some embodiments, the first fixing part comprises a first fixing plate and a first ring protrusion, the first fixing part defines a first hollow portion and a second hollow portion disposed spacedly, the first ring protrusion protrudes from the first fixing plate, an inner cavity of the first ring protrusion communicates with the first hollow portion and the second hollow portion respectively, the depth device and the camera are accommodated in the inner cavity of the first ring protrusion, the depth device captures depth image information through the first hollow portion, and the camera captures color image information through the second hollow portion.

In some embodiments, the first fixing part comprises a second fixing plate, a second ring protrusion, and a third ring protrusion, the second fixing plate defines a third hollow portion and a fourth hollow portion disposed spacedly, the second ring protrusion and the third ring protrusion spacedly protrude from the second fixing plate, and inner cavities of the second ring protrusion and of the third ring protrusion communicate with the third hollow portion and the fourth hollow portion respectively; the depth device and the camera are accommodated in the inner cavities of the second ring protrusion and of the third ring protrusion respectively, the depth device capture color image information through the third hollow portion, and the camera captures color image information through the fourth hollow portion.

In some embodiments, the second fixing part has a third fixing plate and a fourth ring protrusion, the third fixing plate defines a fifth hollow portion, the fourth ring protrusion protrudes from the third fixing plate, an inner cavity of the fourth ring protrusion communicates with the fifth hollow portion, the projector is accommodated in the inner cavity of the fourth ring protrusion, and the projector projects through the fifth hollow portion.

In some embodiments, the support has a connecting part, a first fixing part, and a second fixing part, the connecting part is configured to dispose a first functional component, the first fixing part and the second fixing part are respectively located at two opposite sides of the connecting part; the depth device is fixed on the first fixing part, and the camera and the projector are adjacently disposed on the second fixing part.

In some embodiments, the first fixing part comprises a first fixing plate and a first ring protrusion, the first fixing plate defines a first hollow portion, the first ring protrusion protrudes from the first fixing plate, an inner cavity of the first ring protrusion communicates with the first hollow portion, the depth device is accommodated in the inner cavity of the first ring protrusion, and the depth device captures depth image information through the first hollow portion.

In some embodiments, the second fixing part comprises a second fixing plate and a second ring protrusion, the second fixing plate defines a second hollow portion and a third hollow portion disposed spacedly, the second ring protrusion protrudes from the second fixing plate, and an inner cavity of the second ring protrusion communicates with the second hollow portion and the third hollow portion respectively; the camera and the projector are accommodated in the inner cavity of the second ring protrusion, the camera captures color image information through the second hollow portion, and the projector projects through the third hollow portion.

In some embodiments, the second fixing part comprises a third fixing plate, a third ring protrusion, and a fourth ring protrusion, the third fixing plate defines a fourth hollow portion and a fifth hollow portion disposed spacedly, the third ring protrusion and the fourth ring protrusion spacedly protrude from the third fixing plate, and inner cavities of the third ring protrusion and of the fourth ring protrusion communicate with the fourth hollow portion and the fifth hollow portion respectively; the camera and the projector are accommodated in the inner cavities of the third ring protrusion and of the fourth ring protrusion respectively, the camera captures color image information through the fourth hollow portion, and the projector projects through the fifth hollow portion.

In some embodiments, the support further has a third fixing part, the third fixing part and the first fixing part are disposed adjacently, and the first fixing part is located between the connecting part and the third fixing part; the imaging assembly further comprises a fill-in light, the fill-in light is fixed on the third fixing part, and the fill-in light is configured to reinforce light for the depth device.

In some embodiments, the first fixing part and the second fixing part respectively have a first protrusion and a second protrusion, the first protrusion and the second protrusion protrude relative to the connecting part, the first protrusion and the second protrusion are located at the same side of the connecting part, the first protrusion, the connecting part, and the second protrusion form an avoidance region, the avoidance region is configured to accommodate a second functional component.

According to another aspect of the present disclosure, an electronic apparatus is provided. The electronic apparatus comprises a middle frame, a sliding base, a guiding mechanism, a driving mechanism, and the above-described camera assembly received in the sliding base; wherein, the middle frame defines an accommodating groove; the sliding base is slidably connected with the middle frame in the accommodating groove via the driving mechanism, the guiding mechanism is disposed between the sliding base and the middle frame, so that the sliding base extends out of or is received into the accommodating groove along a direction guided by the guiding mechanism under drive of the driving mechanism; the sliding base is provided with a first functional part, a second functional part, and a third functional part, the depth device captures the depth image information through the first functional part, the camera captures the color image information through the second functional part, and the projector projects through the third functional part.

In some embodiments, the sliding base comprises a sliding frame, a first sliding plate, and a second sliding plate; the sliding frame is made of conductive material, the first sliding plate and the second sliding plate cover on two sides of the sliding frame respectively to form an inner cavity of the sliding base accommodating a plurality of functional components; the first sliding plate and the second sliding plate are made of transparent material.

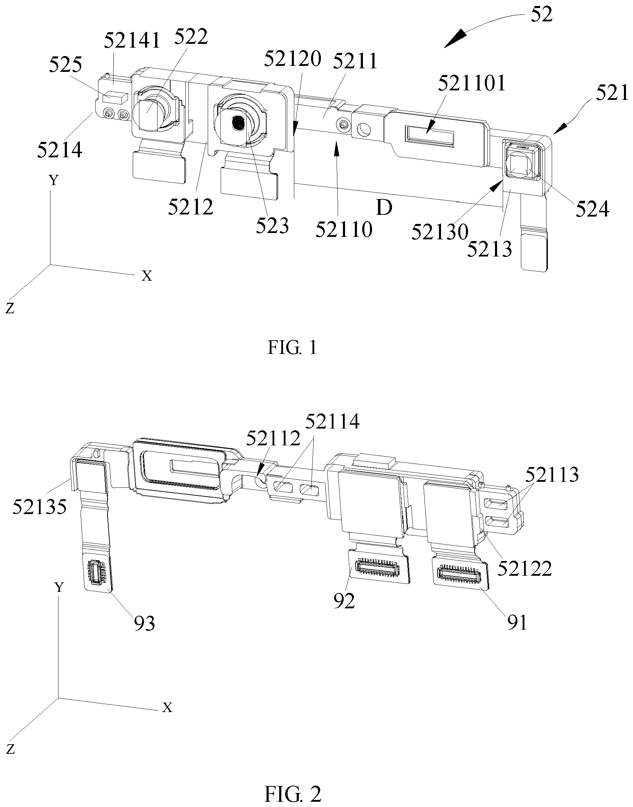

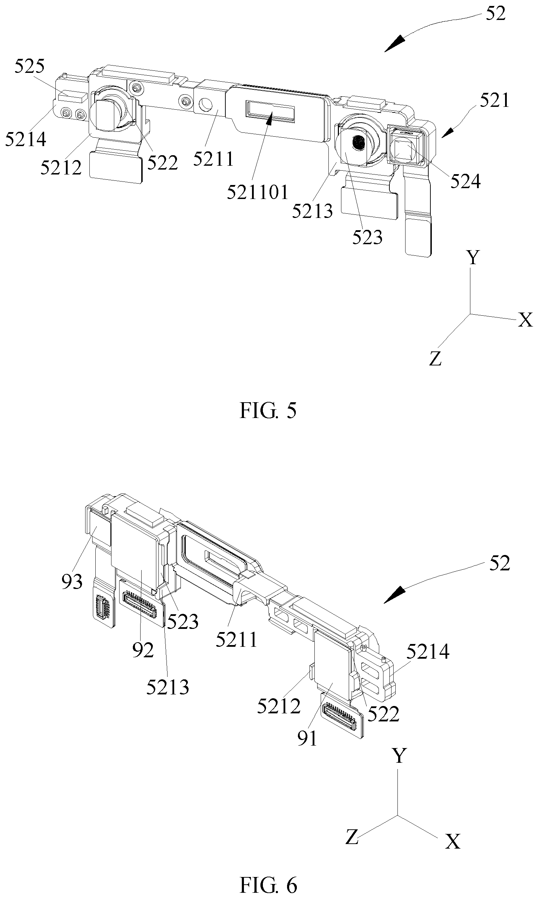

Referring to FIG. 1 and FIG. 5, an imaging assembly 52 of the present disclosure comprises a support 521, a depth device 522, a camera 523, and a projector 524; the depth device 522, the camera 523, and the projector 524 are all disposed on the support 521, the depth device 522 is spaced from the projector 524, a region of the support 521 between the depth device 522 and the projector 524 is capable of being configured to dispose a first functional component, the depth device 522 is configured to capture depth image information, and the camera 523 is configured to capture color image information. The imaging assembly 52 can also be considered as a camera assembly.

In the imaging assembly 52 of the present disclosure, the depth device 522 is spaced from the projector 524 so as to prevent light crosstalk is from being generated between the depth device 522 and the projector 524, thereby improving reliability of the imaging assembly 52.

Referring to FIG. 1, when a support 521 is in a first visual angle, three directions being perpendicular to each other are defined, they are respectively an X direction, a Y direction, and a Z direction.

Referring to FIG. 1, an embodiment of the present disclosure provides an imaging assembly 52 comprising a support 521, a depth device 522, a camera 523, and a projector 524; the depth device 522, the camera 523, and the projector 524 are all disposed on the support 521, the depth device 522 and the camera 523 are disposed adjacently, and the depth device 522 or the camera 523 is separated by a spaced distance D from the projector 524; a region of the support 521 in the spaced distance D is configured to dispose a first functional component, the depth device 522 is configured to capture depth image information, and the camera 523 is configured to capture color image information.

In one embodiment, referring to FIG. 1, the depth device 522 is an infrared camera, and the projector 524 is an infrared laser projector. The projector 524 projects a light spot according to a photographed subject, the depth device 522 receives infrared light reflected by the photographed subject, and acquires spatial information of the photographed subject, that is, depth image information, according to calculation. Of course, in other embodiments, the depth device 522 can also be other devices being suitable for capturing depth image information, such as an ultraviolet camera, a light field camera, a ranging camera, etc. Correspondingly, since the depth device 522 receives the depth image information reflected by the photographed subject, the projector 524 corresponds to the depth device 522, for example, the depth device 522 is an ultraviolet camera, and thus the projector 524 is an ultraviolet laser projector.

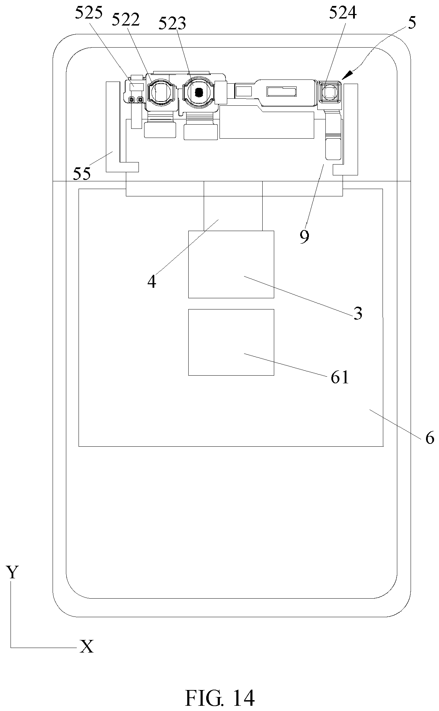

Understandably, the depth device 522, the camera 523, and the projector 524 can be all electrically connected to a main board 6 of an electronic apparatus 100 (referring to FIG. 14), so that an image processing chip 61 on the main board 6 can process image information captured by the depth device 522 and the camera 523 to generate target objects.

Understandably, the imaging assembly 52 in the present disclosure can be applied in an application scene for face recognition, in other words, a photographed subject is a human face. A specific working process of the imaging assembly 52 is that: the projector 524 is used to emit specifically modulated infrared light to the photographed subject; the depth device 522 receives infrared light reflected by the photographed subject, and acquires spatial information of the photographed subject through calculation; the camera 523 is used to perform color image photographing for the photographed subject; image information captured by the depth device 522 and the camera 523 can be transmitted to the image processing chip 61, the image processing chip 61 can gather the depth image information and the color image information and acquire a target image through algorithm processing, the target image can be a color image with information.

In this embodiment, when the depth device 522 and the camera 523 perform image information capturing for the photographed subject, image information of the two may overlap, this is defined as image overlapping region information. The image processing chip 61 performs processing for the image overlapping region information to generate the color image with information. Therefore, sizes of mutual spaced distances among the depth device 522, the camera 523, and the projector 524 relate to advantages and disadvantages of photographing performance of the image assembly 52.

In the prior art, a region between a depth device and a camera is generally configured to dispose other functional components, such as a receiver, which results in that a spaced distance between the depth device and the camera is large, such that the two require a large distance in the Z direction to generate image information overlapping; thus, when a photographed subject is close to the imaging assembly, the imaging assembly is unable to perform effective recognition, which is inconvenient to use of the imaging assembly.

In the imaging assembly 52 provided by the present disclosure, the depth device 522 and the camera 523 are adjacently disposed together, thus the depth device 522 and the camera 523 are enabled to have image information overlapping in a short distance, such that the imaging assembly 52 can perform recognition for a photographed subject in a short distance; moreover, the depth device 522 or the camera 523 is separated by a spaced distance D from the projector 524, so that light crosstalk is prevented from being generated between the depth device 522 or the camera 523 and the projector 524, thereby improving reliability of the imaging assembly 52.

Furthermore, referring to FIG. 1, the camera 523 is located between the depth device 522 and the projector 524. In other words, the camera 523 is arranged in a middle position. Thus, when the imaging assembly 52 is disposed in an apparatus, it is ensured that the camera 523 is arranged in a middle position in the apparatus, such that the camera 523 faces to a photographed subject as much as possible when the camera 523 is used to take selfies, which is conducive to control the angle of taking selfies.

By defining the camera 523 between the depth device 522 and the projector 524, although the camera 523 is separated from the depth device 522 by the connecting part 5211 so as to ensure that there is no light crosstalk existing between them, at the same time, the camera 523 is closer to the depth device 522 than the projector 524, this ensures that the camera 523 and the depth device 522 can have image information overlapping in a short distance along the Z direction, so that a human face can still be recognized when being close to the electronic apparatus 100, and reliability of using the imaging assembly 52 to perform face recognition is further improved.

Furthermore, referring to FIG. 1, the imaging assembly 52 further comprises a fill-in light 525, the fill-in light 525 is disposed on the support 521, and the fill-in light 525 and the depth device 522 are disposed adjacently. Specifically, since the depth device 522 is an infrared camera, and the fill-in light 525 is substantially configured to perform light intensity reinforcement for the depth device 522, the fill-in light 525 can be an infrared fill-in light 525. By further providing the fill-in light 525 to reinforce light for the depth device 522, the depth device 522 is enabled to capture more accurate depth image information, thereby improving reliability of the imaging assembly 52.

Understandably, referring to FIG. 1, the depth device 522 is located between the fill-in light 525 and the camera 523. By limiting the depth device 522 to be closer to the camera 523 than the fill-in light 525, it is ensured that the camera 523 and the depth device 522 can have image information overlapping in a short distance along the Z direction, so that a human face can still be recognized when being close to the electronic apparatus 100, and reliability of using the imaging assembly 52 to perform face recognition is further improved. Of course, in another embodiment, the fill-in light 525 is located between the depth device 522 and the camera 523.

Referring to FIG. 1, the fill-in light 525, the depth device 522, the camera 523, and the projector 524 are arranged sequentially and disposed on the support 521. By disposing the fill-in light 525, the depth device 522, the camera 523, and the projector 524 on the support 521, the multiple components are all mounted on the support 521; when mounting the imaging assembly 52, it is only required to mount the imaging assembly 52 on a component requiring being mounted and thus mounting of the above multiple components can be realized, thereby improving mounting efficiency.

Specifically, the support 521 is approximately in a long strip shape. The fill-in light 525, the depth device 522, the camera 523, and the projector 524 are arranged along a length extension direction of the support 521, that is, the X direction. The support 521 has a first surface 52111 and a second surface 52112 disposed oppositely, and a side surface connecting between the first surface 521111and the second surface 52112.

Understandably, referring to FIG. 1, the support 521 has a first fixing part 5212, a connecting part 5211, and a second fixing part 5213. The connecting part 5211 is configured to dispose the first functional component, the first fixing part 5212 and the second fixing part 5213 are respectively located at two opposite sides of the connecting part 5211, both the depth device 522 and the camera 523 are fixed on the first fixing part 5212, and the projector 524 is fixed on the second fixing part 5213.

Referring to FIG. 1, the support 521 comprises the first fixing part 5212, the connecting part 5211, and the second fixing part 5213 connected sequentially along the X direction. The depth device 522 and the camera 523 are disposed on the first fixing part 5212, and the projector 524 are disposed on the second fixing part 5213, that is, the camera 523 is separated from the projector 524 by a certain spaced distance D through the connecting part 5211, so as to avoid the two from generating light crosstalk due to being too close. The connecting part 5211 of the structural support 521 make the depth device 522, the camera 523, and the projector 524 be spaced with required spaced distances D, in addition to reducing assembly difficulty, the depth device 522, the camera 523, and the projector 524 are all disposed on the support 521. When mounting the imaging assembly 52, it is only required to ensure mounting of the support 521, thereby improving assembly efficiency.

Referring to FIG. 1, the connecting part 5211 on the support 521 makes the first fixing part 5212 be separated from the second fixing part 5213 by a certain distance along the X direction, such that the camera 523 disposed on the first fixing part 5212 and the projector 524 disposed on the second fixing part 5213 will not generate light crosstalk therebetween, thereby ensuring working of the two.

Understandably, referring to FIG. 1, the connecting part 5211 can further define a first receiver hole 521101. Defining the first receiver hole 521101 enables the support 521 to be further provided with functional components besides the imaging assembly 52, so that occupation to space can be reduced when the imaging assembly 52 and other components are assembled together, thereby improving space utility rate.

Understandably, referring to FIG. 1, the first fixing part 5212 and the second fixing part 5213 respectively have a first protrusion 52120 and a second protrusion 52130, the first protrusion 52120 and the second protrusion 52130 protrude relative to the connecting part 5211, the first protrusion 52120 and the second protrusion 52130 are located at the same side of the connecting part 5211, the first protrusion 52120, the connecting part 5211, and the second protrusion 52130 form an avoidance region 52110, the avoidance region 52110 is configured to accommodate a second functional component.

Specifically, referring to FIG. 1, the first fixing part 5212, the connecting part 5211, and the second fixing part 5213 are approximately U-shaped, wherein both the first fixing part 5212 and the second fixing part 5213 has a portion protruding relative to the connecting part 5211 along the Y direction. In other words, the first protrusion 52120 of the first fixing part 5212, the connecting part 5211, and the second protrusion 52130 of the second fixing part 5213 form the avoidance region 52110, the avoidance region 52110 is configured to avoid the second functional component, that is, the second functional component can be arranged in the avoidance region 52110 The structure of the support 521 makes a length of the connecting part 5211 along the Y direction be less than a length of the first fixing part 5212 or the second fixing part 5213 along the Y direction, that is, the connecting part 5211 recesses inwards relative to the first fixing part 5212 and the second fixing part 5213 to form the avoidance region 52110, such that the avoidance region 52110 can be used to dispose the second functional component. At the same time of reducing the area required by assembly of the support 521, it is also ensured that the imaging assembly 52 can allow the second functional component to be accommodated in the avoidance region 52110, in other words, the structure of the support 521 makes the imaging assembly 52 and other components be arranged compactly, so that space utilization rate of the electronic apparatus 100 applying the imaging assembly 52 is improved.

In one embodiment, the second functional component can be rear camera 56, that is, a direction for the second functional component capturing image information is opposite to a direction for the camera 523 to capture image information.

Furthermore, referring to FIG. 1, since the imaging assembly 52 further comprises the fill-in light 525, correspondingly, the support 521 further has a third fixing part 5214, the third fixing part 5214 and the first fixing part 5212 disposed adjacently, and the first fixing part 5212 is located between the connecting part 5211 and the third fixing part 5214; the imaging assembly 52 further comprises the fill-in light 525, the fill-in light 525 is fixed on the third fixing part 5214, and the fill-in light 525 is configured to reinforce light for the depth device 522.

By limiting the first fixing part 5212 between the connecting part 5211 and the third fixing part 5214, the depth device 522 is made to be closer to the camera 523 than the fill-in light 525, it is ensured that the camera 523 and the depth device 522 can have image information overlapping in a short distance along the Z direction, so that a human face can still be recognized when being close to the electronic apparatus 100, and reliability of using the imaging assembly 52 to perform face recognition is further improved.

The third fixing part 5214, the first fixing part 5212, the connecting part 5211, and the second fixing part 5213 are connected sequentially along the X direction. Correspondingly, the fill-in light 525, the depth device 522, the first functional component, the camera 523, and the projector 524 are sequentially fixed on the third fixing part 5214, the first fixing part 5212, the connecting part 5211, and the second fixing part 5213. In this embodiment, both the camera 523 and the projector 524 are disposed on the second fixing part 5213.

Understandably, referring to FIG. 1, the third fixing part 5214 and the first fixing part 5212 are disposed adjacently, the third fixing part 5214 is plate-shaped, the third fixing part 5214 has a fill-in light fixing surface 52141, and the fill-in light 525 is fixed on the fill-in light fixing surface 52141.

Specifically, a volume of the fill-in light 525 is relatively small, therefore the fill-in light 525 is directly disposed on the fill-in light fixing surface 52141, the fill-in light fixing surface 52141 is substantially a portion of the first surface 52111 of the support 521. In this way, a direction of light emitted by the fill-in light 525 is along the second surface 52112 to the first surface 52111, thereby reinforcing light intensity for the depth device 522.

Referring to FIG. 2, a portion of the second surface 52112 of the support 521 facing to the fill-in light fixing surface 52141 defines two first recessed grooves 52113 arranged along the Y direction, and the arrangement of the two first recessed grooves 52113can reduce the weight of the support 521.

The structure of the first fixing part 5212 comprises, but is not limited to, the following embodiment.

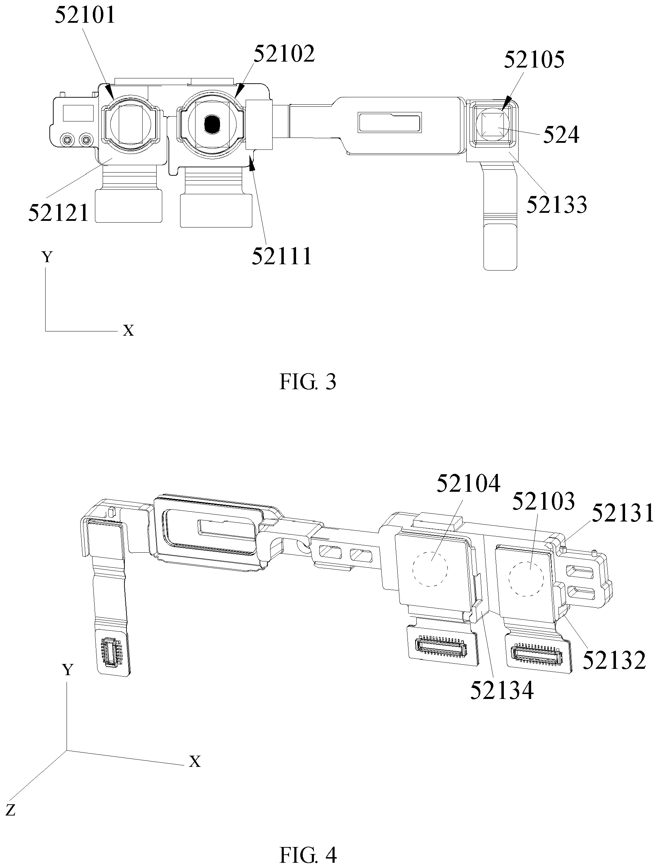

In one embodiment, referring to FIG. 2 and FIG. 3, the first fixing part 5212 comprises a first fixing plate 52121 and a first ring protrusion 52122, the first fixing plate 52121 defines a first hollow portion 52101 and a second hollow portion 52102 disposed spacedly, the first ring protrusion 52122 protrudes from the first fixing plate 52121, and an inner cavity of the first ring protrusion 52122 communicates with the first hollow portion 52101 and the second hollow portion 52102; the depth device 522 and the camera 523 are accommodated in the inner cavity of the first ring protrusion 52122, the depth device 522 captures depth image information through the first hollow portion 52101, and the camera 523 captures color image information through the second hollow portion 52102.

Specifically, referring to FIG. 1 to FIG. 3, the first fixing part 5212 has the first ring protrusion 52122 that can accommodate the depth device 522 and the camera 523, and the depth device 522 can acquire image information from the outside through the first hollow portion 52101 and the second hollow portion 52102 respectively. The first ring protrusion 52122 surrounds the depth device 522 and the camera 523 to prevent the depth device 522 and the camera 523 from being collided or generating displacements. The first fixing part 5212 in such a structure can well fix the depth device 522 and the camera 523, and both the depth device 522 and the camera 523 are accommodated in the inner cavity of the first ring protrusion 52122, so that the arrangement of protrusions is reduced, and thus the weight the support 521 is reduced.

In this embodiment, the shape of the first ring protrusion 52122 is approximately similar to the contours of the depth device 522 and of the camera 523 along a circumferential direction, so that the first ring protrusion 52122 can perform good surrounding and restriction for the depth device 522 and the camera 523. The first hollow portion 52101 and the second hollow portion 52102 are approximately circle apertures, and match with a lens of the depth device 522 and a lens of the camera 523 respectively.

Understandably, the first ring protrusion 52122 protrudes from the second surface 52112 of the support 521; correspondingly, a direction for the depth device 522 and the camera 523 to capture image information is a direction of the first surface 52111 along the second surface 52112. The first ring protrusion 52122 has a part protruding relative to the connecting part 5211 along the Y direction, in other words, the first ring protrusion 52122 occupies about 90% area on the first fixing part 5212.

In one embodiment, a size of the first ring protrusion 52122 along the Z direction can be different in different positions, but can also be identical.

In another embodiment, referring to FIG. 1 and FIG. 4, the first fixing part 5212 comprises a second fixing plate 52131, a second ring protrusion 52132, and a third ring protrusion 52134, the second fixing plate 52131 defines a third hollow portion 52103 and a fourth hollow portion 52104 disposed spacedly, the second ring protrusion 52132 and the third ring protrusion 52134 spacedly protrudes from the second fixing plate 52131, and inner cavities of the second ring protrusion 52132 and of the third ring protrusion 52134 communicate with the third hollow portion 52103 and the fourth hollow portion 52104 respectively; the depth device 522 and the camera 523 are respectively accommodated in the inner cavities of the second ring protrusion 52132 and of the third ring protrusion 52134, the depth device 522 captures depth image information through the third hollow portion 52103, and the camera 523 captures color image information through the fourth hollow portion 52104.

The structure of the first fixing part 5212 is approximately similar to the structure of the aforesaid first fixing part 5212, while the main difference is that: the first fixing part 5212 in this structure uses the spaced second ring protrusion 52132 and third ring protrusion 52134 to replace the first ring protrusion 52122 in the aforesaid first fixing part 5212. Each ring protrusion accommodates one component respectively, thereby further avoiding the depth device 522 and the camera 523 from generating collisions.

The shapes of the second ring protrusion 52132, the third ring protrusion 52134, the third hollow portion 52103, and the fourth hollow portion 52104 can specifically refer to the description of the first ring protrusion 52122, the first hollow portion 52101, and the second hollow portion 52102 of the aforesaid first fixing part 5212, and are not repeated here.

The structure of the above first fixing part 5212 uses each ring protrusion accommodates one component respectively, thereby further avoiding the depth device 522 and the camera 523 from generating collisions.

Referring to FIG. 1 to FIG. 3, the structure of the second fixing part 5213 is specifically that: the second fixing part 5213 comprises a third fixing plate 52133 and a fourth ring protrusion 52135; the third fixing plate 52133 defines a fifth hollow portion 52105, the fourth ring protrusion 52135 protrudes from the third fixing plate 52133, and an inner cavity of the fourth ring protrusion 52135 communicates with the fifth hollow portion 52105; the projector 524 is accommodated in the inner cavity of the fourth ring protrusion 52135, and the projector 524 projects through the fifth hollow portion 52105.

Specifically, the second fixing part 5213 has the fourth ring protrusion 52135 that can accommodate the projector 524, and the projector 524 can projects a light spot through the fifth hollow portion 52105. The fifth hollow portion 52105 is approximately a rectangular aperture.

The structure of the second fixing part 5213 can receive the projector 524 therein, and thereby not only prevent collision but also prevent displacement; moreover, in the second fixing part 5213, an end of the fourth ring protrusion 52135 disposed opposite to the third fixing plate 52133 has an opening, the opening is helpful for the projector 524 to be electrically connected to a flexible circuit board, and facilitates arrangement of traces of and the projector 524.

In the imaging assembly 52 provided by the present disclosure, the depth device 522 and the camera 523 are adjacently disposed together, thus the depth device 522 and the camera 523 are enabled to have image information overlapping in a short distance, such that the imaging assembly 52 can perform recognition for a photographed subject in a short distance; moreover, the depth device 522 or the camera 523 is separated by a spaced distance D from the projector 524, so that light crosstalk is prevented from being generated between the depth device 522 or the camera 523 and the projector 524, thereby improving reliability of the imaging assembly 52.

Furthermore, in the imaging assembly 52 provided by the embodiment of the present disclosure, the depth device 522, the camera 523, and the projector 524 are respectively disposed on the first fixing part 5212 and the second fixing part 5213 of the support 521, the connecting part 5211 located between the first fixing part 5212 and the second fixing part 5213 is configured to dispose the first functional component, and multiple components are all mounted on the support 521; when mounting the imaging assembly 52, it is only required to mount the imaging assembly 52 on a component requiring being mounted and thus mounting of the above multiple components can be realized, thereby improving mounting efficiency.

Referring to FIG. 5, when a support 521 is in a first visual angle, three directions being perpendicular to each other are defined, they are respectively an X direction, a Y direction, and a Z direction.

Referring to FIG. 5 or FIG. 6, an embodiment of the present disclosure provides an imaging assembly 52 comprising a support 521, a depth device 522, a camera 523, and a projector 524; the support 521 has a connecting part 5211, a first fixing part 5212, and a second fixing part 5213, the connecting part 5211 is configured to dispose a first functional component, the first fixing part 5212 and the second fixing part 5213 are respectively located at two opposite sides of the connecting part 5211; the depth device 522 is fixed on the first fixing part 5212, the depth device 522 is configured to capture depth image information; the camera 523 and the projector 524 are adjacently disposed on the second fixing part 5213, and the camera 523 is configured to capture color image information.

In one embodiment, referring to FIG. 6, the depth device 522 is an infrared camera, and the projector 524 is an infrared laser projector 524. The projector 524 projects a light spot according to a photographed subject, the depth device 522 receives infrared light reflected by the photographed subject, and acquires spatial information of the photographed subject, that is, depth image information, according to calculation. Of course, in other embodiments, the depth device 522 can also be other devices being suitable for capturing depth image information, such as an ultraviolet camera, a light field camera, a ranging camera, etc. Correspondingly, since the depth device 522 receives the depth image information reflected by the photographed subject, the projector 524 corresponds to the depth device 522, for example, the depth device 522 is an ultraviolet camera, and the projector 524 is an ultraviolet laser projector 524.

Understandably, the depth device 522, the camera 523, and the projector 524 can be all electrically connected to a main board 6 (as shown in FIG. 14), so that an image processing chip 61 on the main board 6 can process image information captured by the depth device 522 and the camera 523 to generate target objects.

Understandably, the imaging assembly 52 in the present application can be applied in an application scene for face recognition, in other words, a photographed subject is a human face. A specific working process of the imaging assembly 52 is that: the projector 524 is used to emit specifically modulated infrared light to the photographed subject; the depth device 522 receives infrared light reflected by the photographed subject, and acquires spatial information of the photographed subject through calculation; the camera 523 is used to perform color image photographing for the photographed subject; image information captured by the depth device 522 and the camera 523 can be transmitted to the image processing chip 61, the image processing chip 61 can gather the depth image information and the color image information and acquire a target image through algorithm processing, the target image can be a color image with information.

In this embodiment, when the depth device 522 and the camera 523 perform image information capturing for the photographed subject, image information of the two may overlap, this is defined as image overlapping region information. The image processing chip 61 performs processing for the image overlapping region information to generate the color image with information. Therefore, sizes of mutual spaced distances among the depth device 522, the camera 523, and the projector 524 relate to advantages and disadvantages of photographing performance of the image assembly 52.

A depth device, a camera, and a projector in the prior art are scatteredly arranged in an existing electronic apparatus. In assembly, actual spaced distances among the depth device, the camera, and the projector, due to assembling many times, may result in large errors and thus have large differences from required spacing distances, so that photographing performance of the imaging assembly 52 is affected. Moreover, precision of sizes of the mutual spaced distances among the depth device, the camera, and the projector needs to be controlled accurately, this also may bring large difficulty into assembly, that is, be inconvenient to assemble.

Referring to FIG. 5, in the present disclosure, the depth device 522, the camera 523, and the projector 524 are respectively disposed on the first fixing part 5212 and the second fixing part 5213 of the support 521, the connecting part 5211 located between the first fixing part 5212 and the second fixing part 5213 is configured to dispose the first functional component, and multiple components are all mounted on the support 521; when mounting the imaging assembly 52, it is only required to mount the imaging assembly 52 on a component requiring being mounted and thus mounting of the above multiple components can be realized, thereby improving mounting efficiency.

Furthermore, referring to FIG. 5, the camera 523 is located between the depth device 522 and the projector 524. By defining the camera 523 between the depth device 522 and the projector 524, although the camera 523 is separated from the depth device 522 by the connecting part 5211 so as to ensure that there is no light crosstalk existing between them, at the same time, the camera 523 is closer to the depth device 522 than the projector 524, this ensures that the camera 523 and the depth device 522 can have image information overlapping in a short distance along the Z direction, so that a human face can still be recognized when being close to the electronic apparatus 100, and reliability of using the imaging assembly 52 to perform face recognition is further improved.

Furthermore, referring to FIG. 5, the imaging assembly 52 further comprises a fill-in light 525, the fill-in light 525 is disposed adjacent to the depth device 522, and the depth device 522 is located between the fill-in light 525 and the camera 523. Specifically, since the depth device 522 is an infrared camera, and the fill-in light 525 is substantially configured to perform light intensity reinforcement for the depth device 522, the fill-in light 525 can be an infrared fill-in light 525. By further providing the fill-in light 525 to reinforce light for the depth device 522, the depth device 522 is enabled to capture more accurate depth image information, thereby improving reliability of the imaging assembly 52.

At the same time, by limiting the depth device 522 to be closer to the camera 523 than the fill-in light 525, it is ensured that the camera 523 and the depth device 522 can have image information overlapping in a short distance along the Z direction, so that a human face can still be recognized when being close to the electronic apparatus 100, and reliability of using the imaging assembly 52 to perform face recognition is further improved.

Referring to FIG. 5, the fill-in light 525, the depth device 522, the camera 523, and the projector 524 are arranged sequentially and disposed on the support 521.

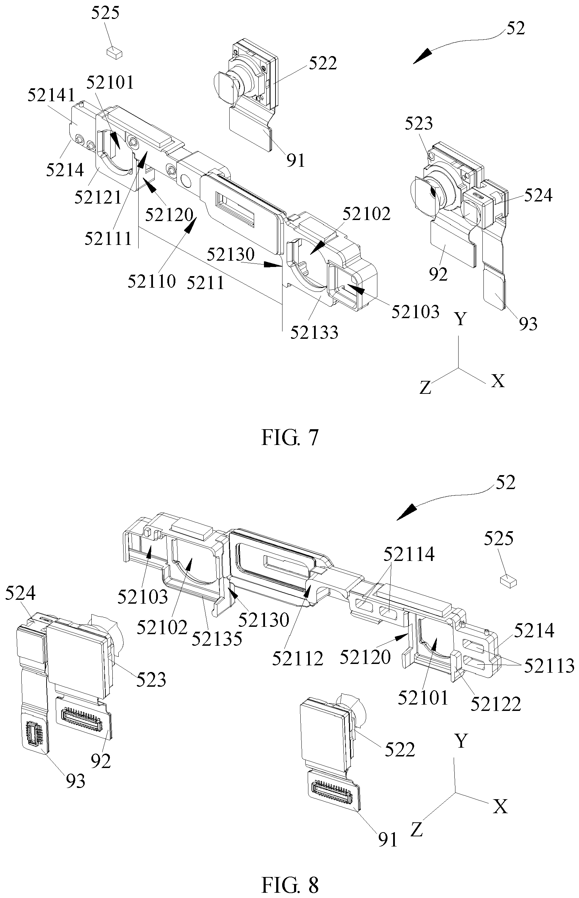

Specifically, referring to FIG. 7 and FIG. 8, the support 521 is approximately in a long strip shape. The fill-in light 525, the depth device 522, the camera 523, and the projector 524 are arranged along a length extension direction of the support 521, that is, the X direction. The support 521 has a first surface 52111 and a second surface 52112 disposed oppositely, and a side surface connecting between the first surface 52111 and the second surface 52112.

Referring to FIG. 5 and FIG. 6, the support 521 comprises a first fixing part 5212, a connecting part 5211, and a second fixing part 5213 sequentially connected along the X direction. The depth device 522 is disposed on the first fixing part 5212, and the camera 523 and the projector 524 are disposed on the second fixing part 5213, that is, the depth device 522 is separated from the camera 523 by a certain spaced distance through the connecting part 5211, so as to avoid the two from generating light crosstalk due to being too close. The fixing parts of the structural support 521 make the depth device 522, the camera 523, and the projector 524 be spaced with required spacing distances, in addition to reducing assembly difficulty, the depth device 522, the camera 523, and the projector 524 are all disposed on the support 521. When mounting the imaging assembly 52, it is only required to ensure mounting of the support 521, thereby improving assembly efficiency.

Referring to FIG. 1, the connecting part 5211 on the support 521 makes the first fixing part 5212 be separated from the second fixing part 5213 by a certain distance along the X direction, such that the depth device 522 disposed on the first fixing part 5212 and the camera 523 disposed on the second fixing part 5213 will not generate light crosstalk therebetween, and it is ensured that the two capture image information accurately.

Understandably, referring to FIG. 5, the connecting part 5211 can further define a first receiver hole 521101. Defining the first receiver hole 521101 enables the support 521 to be further provided with functional components besides the imaging assembly 52, so that occupation to space can be reduced when the imaging assembly 52 and other components are assembled together, thereby improving space utility rate.

Understandably, referring to FIG. 7, the first fixing part 5212 and the second fixing part 5213 respectively have a first protrusion 52120 and a second protrusion 52130, the first protrusion 52120 and the second protrusion 52130 protrude relative to the connecting part 5211, the first protrusion 52120 and the second protrusion 52130 are located at the same side of the connecting part 5211, the first protrusion 52120, the connecting part 5211, and the second protrusion 52130 form an avoidance region 52110, the avoidance region 52110 is configured to accommodate a second functional component.

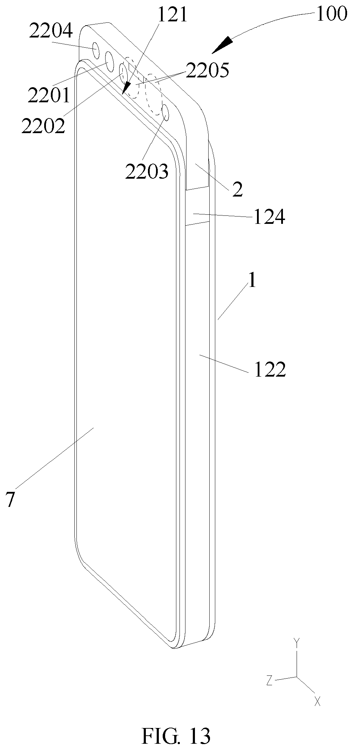

Specifically, referring to FIG. 7, the first fixing part 5212, the connecting part 5211, and the second fixing part 5213 are approximately U-shaped, wherein both the first fixing part 5212 and the second fixing part 5213 has a portion protruding relative to the connecting part 5211 along the Y direction. In other words, the first protrusion 52120 of the first fixing part 5212, the connecting part 5211, and the second protrusion 52130 of the second fixing part 5213 form the avoidance region 52110, the avoidance region 52110 is configured to avoid the second functional component, that is, the second functional component can be arranged in the avoidance region 52110. The structure of the support 521 makes a length of the connecting part 5211 along the Y direction be less than a length of the first fixing part 5212 or the second fixing part 5213 along the Y direction, that is, the connecting part 5211 recesses inwards relative to the first fixing part 5212 and the second fixing part 5213 to form the avoidance region 52110, such that the avoidance region 52110 can be used to dispose the second functional component. At the same time of reducing the area required by assembly of the support 521, it is also ensured that the imaging assembly 52 can allow the second functional component to be accommodated in the avoidance region, in other words, the structure of the support 521 makes the imaging assembly 52 and other components be arranged compactly, so that space utilization rate of the electronic apparatus 100 applying the imaging assembly 52 (as shown in FIG. 13) is improved.

In one embodiment, the second functional component can be rear camera, that is, a direction for the second functional component capturing image information is opposite to a direction for the camera to capture image information.

Furthermore, referring to FIG. 5, since the imaging assembly 52 further comprises the fill-in light 525, correspondingly, the support 521 further has a third fixing part 5214, the third fixing part 5214 and the first fixing part 5212 disposed adjacently, and the first fixing part 5212 is located between the connecting part 5211 and the third fixing part 5214; the imaging assembly 52 further comprises the fill-in light 525, the fill-in light 525 is fixed on the third fixing part 5214, and the fill-in light 525 is configured to reinforce light for the depth device 522.

By limiting the first fixing part 5212 between the connecting part 5211 and the third fixing part 5214, the depth device 522 is made to be closer to the camera 523 than the fill-in light 525, it is ensured that the camera 523 and the depth device 522 can have image information overlapping in a short distance along the Z direction, so that a human face can still be recognized when being close to the electronic apparatus 100, and reliability of using the imaging assembly 52 to perform face recognition is further improved.

Referring to FIG. 5, the third fixing part 5214, the first fixing part 5212, the connecting part 5211, and the second fixing part 5213 are connected sequentially along the X direction. Correspondingly, the fill-in light 525, the depth device 522, the first functional component, the camera 523, and the projector 524 are sequentially fixed on the third fixing part 5214, the first fixing part 5212, the connecting part 5211, and the second fixing part 5213. In this embodiment, both the camera 523 and the projector 524 are disposed on the second fixing part 5213.

In one embodiment, referring to FIG. 7 and FIG. 8, the structure of the first fixing part 5212 is specifically that: the first fixing part 5212 comprises a first fixing plate 52121 and a first ring protrusion 52122, the first fixing plate 52121 defines a first hollow portion 52101, the first ring protrusion 52122 protrudes from the first fixing plate 52121, and an inner cavity of the first ring protrusion 52122 communicates with the first hollow portion 52101; the depth device 522 is accommodated in the inner cavity of the first ring protrusion 52122, and the depth device 522 captures depth image information through the first hollow portion 52101. Of course, in other embodiments, the first fixing part 5212 can also be flat-shaped, that is, the depth device 522 is directly fixed on the first fixing part 5212.

Specifically, referring to FIG. 6, the shape of the first ring protrusion 52122 is similar to the shape of the depth device 522, so as to ensure that the depth device 522 can obtain good surrounding of the first ring protrusion 52122. The first hollow portion 52101 is approximately a circle aperture, and matches with the shape of the camera 523 of the depth device 522; the camera 523 of the depth device 522 faces to the first hollow portion 52101, such that the camera 523 of the depth device 522 can acquire depth image information from the outside through the first hollow portion 52101.

Specifically, referring to FIG. 6 and FIG. 8, the first fixing part 5212 has the first ring protrusion 52122 that can accommodate the depth device 522, and the depth device 522 can acquire depth image information from the outside through the first hollow portion 52101, that is, the depth device 522 is mostly fixed on the first fixing part 5212, and the first ring protrusion 52122 surrounds the depth device 522 to prevent the depth device 522 from being collided. The first fixing part 5212 in such a structure can well fix the depth device 522, thereby improving reliability of the imaging assembly 52.

Specifically, referring to FIG. 8, the first ring protrusion 52122 protrudes from the second surface 52112 of the support 521; correspondingly, a direction for the depth device 522 to capture depth image information is a direction of the first surface 52111 along the second surface 52112. The first ring protrusion 52122 has a part protruding relative to the connecting part 5211 along the Y direction, in other words, the first ring protrusion 52122 occupies about 90% area on the first fixing part 5212.

In one embodiment, a size of the first ring protrusion 52122 along the Z direction can be different in different positions, but can also be identical.

Referring to FIG. 6, the structure of the first fixing part 5212 can receive the depth device 522 therein, and thereby not only prevent collision but also prevent displacement; moreover, in the first fixing part 5212, an end of the first ring protrusion 52122 disposed opposite to the first fixing plate 52121 has an opening, the opening facilitates electrical connection between the depth device 522 and a first flexible circuit board 91, and facilitates arrangement of traces of the depth device 522.

Understandably, referring to FIG. 7 and FIG. 8, the third fixing part 5214 and the first fixing part 5212 are disposed adjacently, the third fixing part 5214 is plate-shaped, the third fixing part 5214 has a fill-in light fixing surface 52141, and the fill-in light 525 is fixed on the fill-in light fixing surface 52141.

Specifically, a volume of the fill-in light 525 is relatively small, therefore the fill-in light 525 is directly disposed on the fill-in light fixing surface 52141, the fill-in light fixing surface 52141 is substantially a portion of the first surface 52101 of the support 521. In this way, a direction of light emitted by the fill-in light 525 is along the second surface 52112 to the first surface 52111, thereby reinforcing light intensity for the depth device 522.

A portion of the second surface 52112 of the support 521 facing to the fill-in light fixing surface 52141 defines two first recessed grooves 52113 arranged along the Y direction, and the arrangement of the two first recessed grooves 52113 can reduce the weight of the support 521.

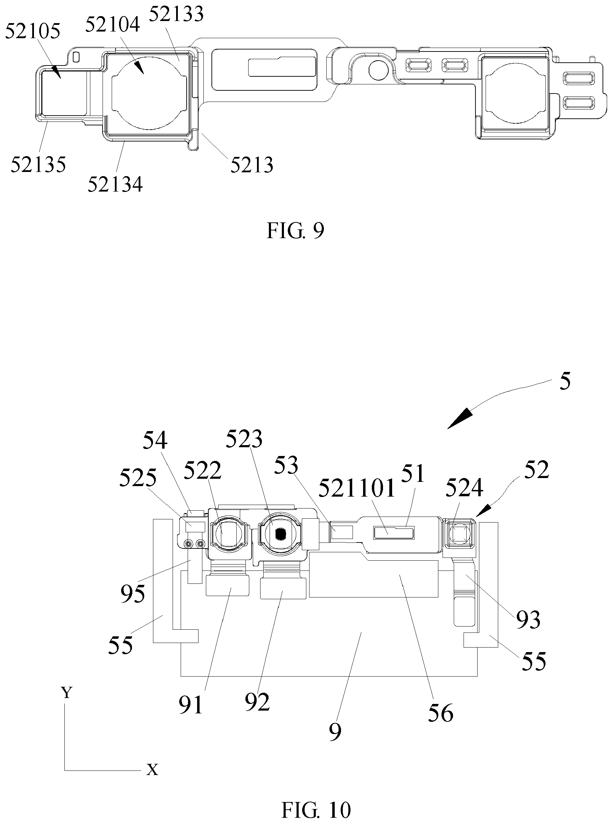

Referring to FIG. 8 and FIG. 9, the structure of the second fixing part 5213 comprises but is not limited to the following embodiment.

In one embodiment, referring to FIG. 5, FIG. 7 and FIG. 8, the second fixing part 5213 comprises a second fixing plate 52131 and a second ring protrusion 52132, the second fixing plate 52131 defines a second hollow portion 52102 and a third hollow portion 52103 disposed spacedly, the second ring protrusion 52132 protrudes from the second fixing plate 52131, and an inner cavity of the second ring protrusion 52132 communicates with the second hollow portion 52102 and the third hollow portion 52103 respectively; the camera 523 and the projector 524 are accommodated in the inner cavity of the second ring protrusion 52132, the camera 523 captures color image information through the second hollow portion 52102, and the projector 524 projects through the third hollow portion 52103.

Specifically, referring to FIG. 4, the second fixing part 5213 has the second ring protrusion 52132 that can accommodate the camera 523 and the projector 524, and the camera 523 and the projector 524 can acquire color image information from the outside through the second hollow portion 52102 and project a lattice to the outside through the third hollow portion 52103 respectively. The second ring protrusion 52132 surrounds the camera 523 and the projector 524 to prevent the camera 523 and the projector 524 from being collided or generating displacement. The second fixing part 5213 with such a structure can well fix the camera 523 and the projector 524, and both the camera 523 and the projector 524 are received in the inner cavity of the second ring protrusion 52132, the arrangement of protrusions is reduced, and thus the weight of the support 521 is reduced.

In this embodiment, referring to FIG. 8, the shape of the second ring protrusion 52132 is approximately similar to the contours of the camera 523 and the projector 524 along a circumferential direction, such that the second ring protrusion 52132 can perform good surrounding and limiting for the camera 523 and the projector 524. The second hollow portion 52102 is approximately a circle aperture and matches with the shape of the camera 523, a lens of the camera 523 faces to the second hollow portion 52102, so that the lens of the camera 523 can acquire depth image information from the outside through the second hollow portion 52102. The third hollow portion 52103 is approximately a rectangular aperture, such that the projector can project a light spot through the third hollow portion 52103.

Understandably, referring to FIG. 8, the second ring protrusion 52132 protrudes from the second surface 52102 of the support 521; correspondingly, a direction for the camera 523 to capture color image information is a direction of the first surface 52111 along the second surface 52112. The second ring protrusion 52132 has a part protruding relative to the connecting part 5211 along the Y direction, in other words, the second ring protrusion 52132 occupies about 90% area on the second fixing part 5213.

In one embodiment, referring to FIG. 8, a size of the second ring protrusion 52132 along the Z direction can be different in different positions, but can also be identical.

The structure of the second fixing part 5213 can receive the camera 523 and the projector 524 therein, and thereby not only prevent collision but also prevent displacement; moreover, in the second fixing part 5213, an end of the second ring protrusion 52132 disposed opposite to the second fixing plate 52131 has an opening, the opening is helpful for the camera 523 and the projector 524 to be electrically connected to a second flexible circuit board 92 and a third flexible circuit board 93 respectively, and facilitates arrangement of traces of the camera 523 and the projector 524. Furthermore, both the camera 523 and the projector 524 are accommodated in the inner cavity of the second ring protrusion 52132, so that the arrangement of protrusions is reduced, and thus the weight the support 521 is reduced.

In another embodiment, referring to FIG. 5 and FIG. 9, the second fixing part 5213 comprises a third fixing plate 52133, a third ring protrusion 52134, and a fourth ring protrusion 52135; the third fixing plate 52133 defines a fourth hollow portion 52104 and a fifth hollow portion 52105 disposed spacedly, the third ring protrusion 52134 and the fourth ring protrusion 52135 spacedly protrude from the third fixing plate 52133, and inner cavities of the third ring protrusion 52134 and the fourth ring protrusion 52135 communicated with the fourth hollow portion 52104 and the fifth hollow portion 52105 respectively; the camera 523 and the projector 524 are respectively accommodated in the inner cavities of the third ring protrusion 52134 and the fourth ring protrusion 52135, the camera 523 captures color image information through the fourth hollow portion 52104, and the projector 524 projects through the fifth hollow portion 52105.

Referring to FIG. 9, the structure of the second fixing part 5213 is approximately similar to the structure of the aforesaid second fixing part 5213, while the main difference is that the second fixing part 5213 in this structure uses the spaced third ring protrusion 52134 and fourth ring protrusion 52135 to replace the second ring protrusion 52132 of the aforesaid second fixing part 5213. Each ring protrusion accommodates one component, thereby further avoiding the camera 523 and the projector 524 from generating collision.

The shapes of the third ring protrusion 52134, the fourth ring protrusion 52135, the fourth hollow portion 52104, and the fifth hollow portion 52105 can specifically refer to the description of the second ring protrusion 52132, the second hollow portion 52102, and the third hollow portion 52103 of the aforesaid second fixing part 5213, and are not repeated here.

The structure of the above second fixing part 5213 uses each ring protrusion to accommodate one component respectively, thereby further avoiding the camera 523 and the projector 524 from generating collision.

In the imaging assembly 52 provided by the embodiments of the present disclosure, the depth device 522, the camera 523, and the projector 524 are respectively disposed on the first fixing part 5212 and the second fixing part 5213 of the support 521, the connecting part 5211 located between the first fixing part 5212 and the second fixing part 5213 is configured to dispose the first functional component, and multiple components are all mounted on the support 521; when mounting the imaging assembly 52, it is only required to mount the imaging assembly 52 on a component requiring being mounted and thus mounting of the above multiple components can be realized, thereby improving mounting efficiency.

Referring to FIG. 10, one embodiment of the present disclosure provides an electronic assembly 5, the electronic assembly 5 comprises a receiver 51 and the imaging assembly 52. An electronic apparatus provided by an embodiment of the present disclosure, such as any one of the electronic apparatuses described above, can comprise the electronic assembly 5.

Referring to FIG. 10, in one embodiment, the fill-in light 525, the depth device 522, the camera 523, the receiver 51, and the projector 524 are sequentially arranged on the support 521 along the X direction, such that the arrangement of the components is optimized.

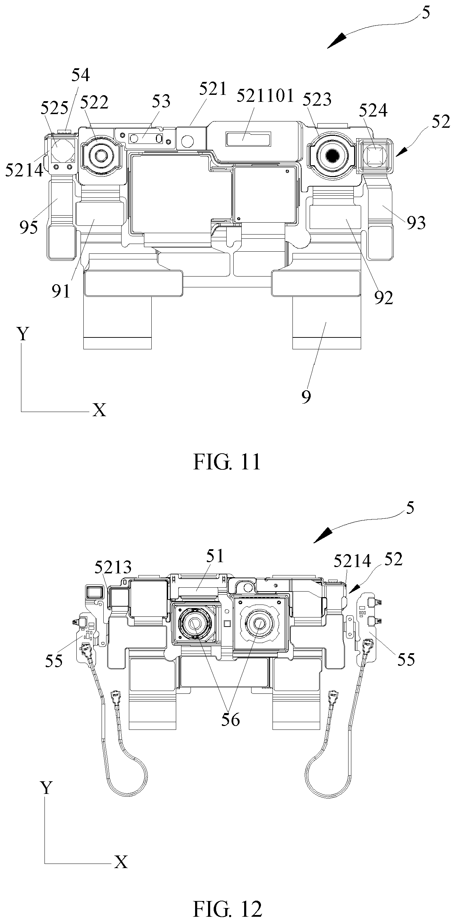

Referring to FIG. 11, in another embodiment, the fill-in light 525, the depth device 522, the receiver 51, the camera 523, and the projector 524 are sequentially arranged on the support 521 along the X direction, such that the arrangement of the components can also be optimized.

Understandably, the specific structure of the imaging assembly 52 can specifically refer to the embodiments shown in FIG. 1 to FIG. 4, and is not repeated here.

Referring to FIG. 2, FIG. 5, FIG. 10, and FIG. 11, the receiver 51 is carried on a region of the support 521 in the spaced distance D (or the connecting part 5211), and the receiver 51 is carried on the second surface 52112 of the support 521. A vibrating part of the receiver 521 communicates with the first receiver hole 521101, that is, sound signals of the receiver 51 can be transmitted to the outside environment through the first receiver hole 521101.

Understandably, referring to FIG. 10 and FIG. 11, in one embodiment, the electronic assembly 5 further comprises an image processing chip, a main flexible circuit board 9, a first flexible circuit board 91, a second flexible circuit board 92, and a third flexible circuit board 93; the image processing chip is configured to process the depth image information and the color image information, the image processing chip is electrically connected to the main flexible circuit board 9, each of the first flexible circuit board 91, the second flexible circuit board 92, and the third flexible circuit board 93 has one end electrically connected to the main flexible circuit board 9, and the other ends of the first flexible circuit board 91, the second flexible circuit board 92, and the third flexible circuit board 93 are respectively electrically connected to the depth device 522, the camera 523, and the projector 524.

Also referring to FIG. 14, specifically, the main board 6 is provided with the image processing chip. The electronic assembly 5 is electrically connected to the main board 6 so as to establish a data transmission path with the main board 6.

The first flexible circuit board 91, the second flexible circuit board 92, the third flexible circuit board 93, and a fourth flexible circuit board 94 are all electrically connected to the main flexible circuit board 9. The main flexible circuit board 9 is electrically connected to the main board 6 so as to establish a data transmission path with the image processing chip of the main board 6.

Furthermore, referring to FIG. 1, FIG. 10, and FIG. 11, the electronic assembly 5 further comprises an approach sensing assembly 53, the approach sensing assembly 53 and the receiver 51 are disposed in parallel on the connecting part 5211, and the approach sensing assembly 53 is configured to measure distances and sense light in the environment.

Referring to FIG. 10 and FIG. 11, the approach sensing assembly 53 is also called a three-in-one light sensing assembly. The approach sensing assembly 53 is mainly configured to sense environmental brightness to control backlight display, automatically adjust to a clear and comfortable optimal screen brightness, and can also switch on and off a screen and a touch control function according to sizes of distances when sensing approaching objects. Its sensing distance can be up to 10 centimeters, for example, a screen is adjusted to be brighter in sunshine, and brightness of the screen is reduced in darkness; during a call function, the screen and the touch control function will be automatically switched off when a face approaches, and will be automatically switched on when the call is ended and the face leaves. Moreover, it also has functions of interrupting notifications and adjusting detection intervals, the whole power consumption can be further saved, so that the power consumption problem, which is the most concerned in application of portable apparatuses, is solved effectively.

In this embodiment, referring to FIG. 10, the approach sensing assembly 53 is located between the depth device 522 and the receiver 51. In another embodiment, referring to FIG. 7 and FIG. 11, the approach sensing assembly 53 can also be located between the depth device 522 and the receiver 51. Referring to FIG. 1, FIG. 3, FIG. 7, and FIG. 11, the approach sensing assembly 53 is located on the first surface 52111 of the support 521. By disposing the approach sensing assembly 53 on the connecting part 5211 of the support 521, utilizing rate of the connecting part 5211 is further improved, so that arrangement of the electronic assembly 5 is more compact. Moreover, since the receiver 51, the approach sensing assembly 53, the fill-in light 525, the depth device 522, the camera 523, and the projector 524 are all disposed on the support 521, in assembly, it is only required to grasp mounting accuracy of the support 521, while is not required to mount many times, so that the mounting accuracy is avoided from generating a big error due to mounting the components many times.

Specifically, referring to FIG. 2, FIG. 8, FIG. 10, and FIG. 11, a region of the second surface 52112 of the support 521 facing to the approach sensing assembly 53 is provided with a second recessed groove 52114, thereby further reducing the weight of the support 521.

Furthermore, referring to FIG. 1, FIG. 5, FIG. 10, and FIG. 11, the electronic assembly 5 further comprises a light sensor 54. The light sensor 54 is disposed on the first connecting part 5212, a direction for the light sensor 54 to receive light intersects with a direction for the depth device 522 to capture depth image information.

Specifically, the light sensor 54 is disposed on a side surface of the support 521, and is located on the third fixing part 5214. The light sensor 54 receives light along the Y direction.

By disposing the light sensor 54 on the support 521, utilizing rate of the support 521 is further improved, so that arrangement of the electronic assembly 5 is more compact. Moreover, since the light sensor 54, the receiver 51, the approach sensing assembly 53, the fill-in light 525, the depth device 522, the camera 523, and the projector 524 are all disposed on the support 521, in assembly, it is only required to grasp mounting accuracy of the support 521, while is not required to mount many times, so that the mounting accuracy is avoided from generating a big error due to mounting the components many times.

Furthermore, referring to FIG. 1, FIG. 5, FIG. 10, and FIG. 12, the electronic assembly 5 further comprises two antenna assemblies 55, the two antenna assemblies 55 are respectively located at two opposite sides of the support 521, and the two antenna assemblies 55 are respectively close to the first fixing part 5212 and the second fixing part 5213.

Specifically, the two antenna assemblies 55 are respectively close to the third fixing party 5214 and the second fixing part 5213. By compactly disposing the two antenna assemblies 55 at two sides of the support 521 along the X direction, the arrangement of the electronic assembly 5 is optimized.

Furthermore, referring to FIG. 12, the second functional component is a rear camera 56, which is disposed in the avoidance region of the support 521 and is compact in structure, thereby further optimizing the structure of the electronic assembly 5.

In the electronic assembly 5 provided by the embodiments of the present disclosure, the depth device 522, the camera 523, and the projector 524 are respectively disposed on the first fixing part 5212 and the second fixing part 5213 of the support 521, the connecting part 5211 located between the first fixing part 5212 and the second fixing part 5213 is configured to dispose components such as the receiver 51 and the like, and multiple components are all mounted on the support 521; when mounting the imaging assembly 52, it is only required to mount the imaging assembly 52 on a component requiring being mounted and thus mounting of the above multiple components can be realized, thereby improving mounting efficiency.

Referring to FIG. 1, FIG. 5, and FIG. 13, an embodiment of the present disclosure provides an electronic apparatus 100. The electronic apparatus 100 can be any electronic apparatus, for example, smart devices such as a tablet computer, a mobile phone, a camera, a personal computer, a notebook computer, a vehicular device, a wearable device, and so on. In this embodiment, in order to describe conveniently, a width direction of the electronic apparatus 100 corresponds to the X direction of the support 521, a length direction of the electronic apparatus 100 corresponds to the Y direction of the support 521, and a thickness direction of the electronic apparatus 100 corresponds to the Z direction of the support 521.

Referring to FIG. 13 to FIG. 15, the electronic apparatus 100 provided by an embodiment I of the present application mainly comprises a middle frame 1 and a sliding base 2, the sliding base 2 is slidably connected to the middle frame 1, such that the electronic apparatus 100 can make the sliding base 2 extend out of or retract into the middle frame 1 according to actual requirements of users. Wherein, the sliding base 2 receives the electronic assembly 5 therein, relative sliding between the sliding base 2 and the middle frame 1 enables the electronic assembly 5 to slide out when being required to be used, so that limitation brought into the screen-to-body ratio of a display screen of the electronic apparatus 100 by the use of the electronic assembly 5 is avoided, and it is conducive to improve the screen-to-body ratio of the electronic apparatus 100.

Specifically, referring to FIG. 13 to FIG. 15, the electronic apparatus 100 comprises the middle frame 1, the sliding base 2, a guiding mechanism 4, a driving mechanism 3, and the electronic assembly 5 received in the sliding base 2. The middle frame 1 comprises a pair of side end surfaces 122 disposed oppositely and a top end surface 121 connected between the pair of side end surfaces 122, the top end surface 121 defines an accommodating groove 124, the accommodating groove 124 runs through the pair of side end surfaces 122; the sliding base 2 is slidably connected with the middle frame 1 in the accommodating groove 124 via the driving mechanism 3, the guiding mechanism 4 is disposed between the sliding base 2 and the middle frame 1, so that the sliding base 2 extends out of or is received into the accommodating groove 124 along a direction guided by the guiding mechanism 4 under drive of the driving mechanism 3; the sliding base 2 is provided with a first functional part 2201, a second functional part 2202, and a third functional part 2203 located at the same surface, the depth device 522 in the imaging assembly 52 captures the depth image information through the first functional part 2201, the camera 523 in the imaging assembly 52 captures the color image information through the second functional part 2202, and the projector 524 in the imaging assembly 52 projects through the third functional part 2203.

Understandably, the specific structures of the imaging assembly 52 and the electronic apparatus 5 can refer to the embodiments shown in FIG. 1 to FIG. 12, and are not repeated here.

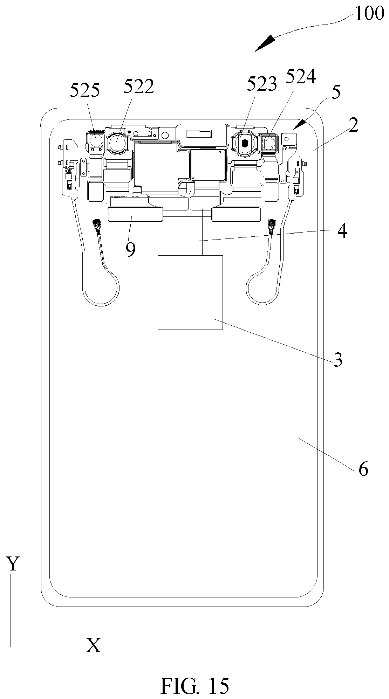

Understandably, in some embodiments, referring to FIG. 14 and FIG. 15, the electronic apparatus 100 further comprises a main board 6, the main board 6 is provided thereon with an image processing chip. The electronic assembly 5 is electrically connected to the main board 6, so as to establish a data transmission channel with the main board 6.

Understandably, in some embodiments, referring to FIG. 10, FIG. 11, FIG. 14, and FIG. 15, the electronic apparatus 100 further comprises a main flexible circuit board 9, a first flexible circuit board 91, a second flexible circuit board 92, a third flexible circuit board 93, and a fourth flexible circuit board 95. In this embodiment, the first flexible circuit board 91, the second flexible circuit board 92, the third flexible circuit board 93, and the fourth flexible circuit board 95 are respectively electrically connected to the depth device 522, the camera 523, the projector 524, and the fill-in light 525, and the first flexible circuit board 91, the second flexible circuit board 92, the third flexible circuit board 93, and the fourth flexible circuit board 95 are all electrically connected to the main flexible circuit board 9; the main flexible circuit board 9 is electrically connected to the main board 9 so as to establish the data transmission channel with the image processing chip of the main board 6.

The main flexible circuit board 9 can be coiled along sliding of the sliding base 2 so as to ensure that the sliding base 2 can reliably slide out of or retract into the accommodating groove 124.

Referring to FIG. 3, FIG. 4, and FIG. 13, when the electronic apparatus 100 needs to perform face recognition, it is only required to make the sliding base 2 extend out of the accommodating groove 124, the projector 524 emits specifically modulated infrared light through the fifth hollow portion 52105 and the third functional part 2203 sequentially to a photographed subject; the depth device 522 receives infrared light reflected from the photographed subject through the first functional part 2201 and the first hollow portion 52101 sequentially, and acquires spatial information of the photographed subject through calculation; the camera 523 receives light reflected from the photographed subject through the second functional part 2202 and the second hollowed portion 52102 (the fourth hollowed portion 52104) sequentially, so as to perform color image photographing for the photographed subject. Image information captured by the depth device 522 and the camera 523 can be transmitted to the image processing chip, the image processing chip can gather the depth image information and the color image information and acquire an object image through algorithm processing, the object image can be a colorful picture with information.

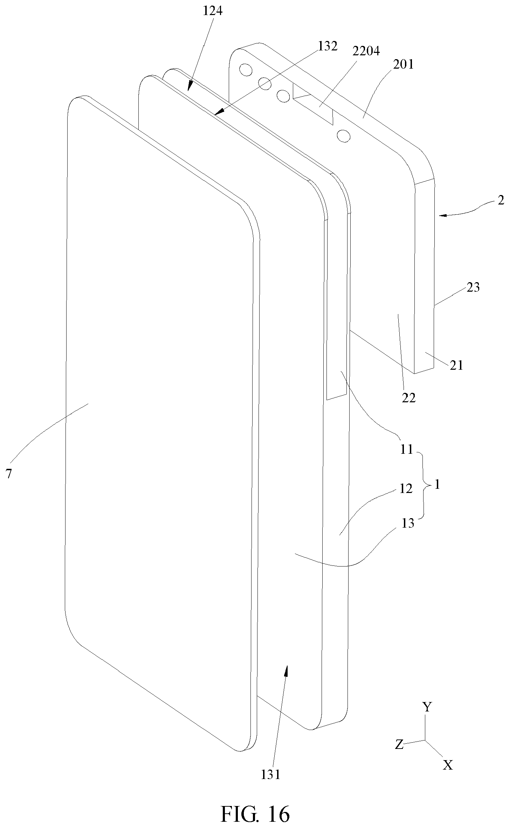

Referring to FIG. 13 and FIG. 16, in the electronic apparatus 100, the accommodating groove 124 is defined on the top end surface 121 of a side frame 12, such that a display device 7, the sliding base 2, and a middle plate 11 of the electronic apparatus 100 form a sandwich structure when the sliding base 2 is slidably connected to the middle frame 1. This structure ensures that the display device 7 and the middle plate 11 can provide protection for the sliding base 2 located therebetween to prevent the sliding base 2 from being broken when the electronic apparatus 100 falls or is subjected to collision by an external force.

Specifically, referring to FIG. 13 and FIG. 16, the middle fame 1 comprises the middle plate 11 and the side frame 12 surrounding the middle plate 11. In this embodiment, the side frame 12 is configured to be covered with the display device 7 to form a complete casing of the electronic apparatus 100. The middle plate 11 has a pair of side end surfaces 122 disposed oppositely, and the top end surface 121 and a bottom end surface connected between the pair of side end surfaces 122. In other words, the middle plate 11 is approximately a rectangular frame. The side end surfaces 122 are also longer sides of the electronic apparatus 100, generally, the side end surfaces 122 are configured to arrange a volume key, a card holder, a card base, and the like of the electronic apparatus 100. The top end surface 12a and the bottom end surface are shorter sides of the electronic apparatus 100, generally, the bottom end surface 12c is configured to arrange a receiver, a speaker, and the like of the electronic apparatus 100.

For ease of understanding, referring to FIG. 13, inner space of the middle frame 1 except the accommodating groove 124 is defined as an inner cavity of the middle frame 1, that is, the accommodating groove 124 and the inner cavity form complete inner space of the middle frame 1.

Specifically, referring to FIG. 13 and FIG. 16, a length of the accommodating groove 124 along the X direction is equal to a length of the middle frame 1 along the X direction, in other words, parts of the two side end surfaces 122 of the side frame 12 being adjacent to the top end surface 121 form two openings due to the existence of the accommodating groove 124, such that the sliding base 2 corresponding to the accommodating groove 124 has a larger volume capable of accommodating more electronic assemblies 5. Correspondingly, the more the electronic assemblies 5 in the sliding base 2, the less the effect of the electronic assemblies 5 on the screen-to-body ratio of the display screen of the electronic apparatus 100.

Specifically, referring to the drawings, a size of the sliding base 2 corresponds to that of the accommodating groove 124, that is, the whole accommodating groove 124 is filled with the sliding base 2.

Referring to FIG. 13, when a certain electronic assembly 5 in the sliding base 2 is required to work, it is possible to slide the sliding base 2 correspondingly so as to make the sliding base 2 be in an extending state. Referring to FIG. 13, when it is required to use the function of the imaging assembly 52, the sliding base 2 is slid so as to make the sliding base 2 be in an extending state, at this time, it is possible to achieve the recognition function of the imaging assembly 52 through corresponding functional parts; referring to FIG. 14 and FIG. 15, when it is not required to use the function of the imaging assembly 52, the sliding base 2 is slid so as to make the sliding base 2 be in a retracted state, which facilitates reception of the electronic apparatus 100.

Understandably, referring to FIG. 16, the sliding base 2 includes a sliding frame 21, a first sliding plate 22, and a second sliding plate 23; the sliding frame 21 is made of conductive material, the first sliding plate 22 and the second sliding plate 23 cover on two sides of the sliding frame 21 respectively, so as to form the inner cavity of the sliding base 2 accommodating a plurality of functional components. The first sliding plate 22 and the second sliding plate 23 are made of transparent material.

Specifically, referring to FIG. 13 and FIG. 16, the first sliding plate 22 is provided with light shielding ink on regions except the first functional part 2201, the second functional part 2202, and the third functional part 2203; in other words, only the first functional part 2201, the second functional part 2202, and the third functional part 2203 can allow light to pass through.'

Referring to FIG. 10, FIG. 11, FIG. 13, and FIG. 16, since the imaging assembly 52 is further provided therein with the fill-in light 525, correspondingly, the first sliding plate 22 is further provided thereon with a fourth functional part 2204; that is, the first sliding plate 22 is provided with light shielding ink on regions except the first functional part 2201, the second functional part 2202, the third functional part 2203, and the fourth functional part 2204; in other words, only the first functional part 2201, the second functional part 2202, the third functional part 2203, and the fourth functional part 2204 can allow light to pass through.

Specifically, referring to FIG. 11 to FIG. 13, in the electronic assembly 5, the component disposed in the avoidance region 52110 of the support 521 is a rear camera 56, and thus the corresponding second sliding plate 23 can be further provided thereon with a fifth functional part 2205; the second sliding plate 23 where the fifth functional part 2205 is disposed and the first sliding plate 22 where the aforementioned functional parts are disposed are disposed oppositely, so as to realize a rear photographing function of the rear camera 523.

Specifically, referring to FIG. 1, FIG. 5, and FIG. 16, the sliding base 2 further defines a second receiver aperture 224; a vibrating part of the receiver 51 sequentially communicates with the first receiver aperture 521101 of the connecting part 5211 and the second receiver aperture 224 of the sliding base 2, such that new sound signals of the receiver 51 are output through the first receiver aperture 521101 and the second receiver aperture 224 sequentially when the receiver 51 extends out of the accommodating groove 124. The second receiver aperture 224, the first functional part 2201, the second functional part 2202, the third functional part 2203, and the fourth functional part 2204 are all formed on the same first sliding plate 22.

Specifically, referring to FIG. 10 and FIG. 16, the second receiver aperture 224 is defined to be close to the first end surface 201. The vibrating part of the receiver 51 sealingly communicates with the first receiver aperture 521101 and the second receiver aperture 224, the vibrating part of the receiver 51 vibrates to generate sound signals, and the sound signals are transmitted to the outside through the first receiver aperture 521101 and the second receiver aperture 224 sequentially.

Understandably, referring to FIG. 13, as long as the second receiver hole 224 is exposed, the sound signals of the receiver 51 can be transmitted to the outside through the first receiver hole 521101.

The electronic apparatus 100 provided by the embodiments of the present disclosure can make the sliding base 2 extend out of or retract into the middle frame 1 according to actual requirements of users, specifically: when a certain component of the electronic assembly 5 in the sliding base 2 is required to work, it is possible to slide the sliding base 2 correspondingly, so that the sliding base 2 is in the extending state; at this time, the functional parts of the sliding base 2 are not covered by the display screen, and the functional components corresponding to the functional parts can transmit signals with the outside.

Understandably, referring to FIG. 14 to FIG. 16, the driving mechanism 3 is fixed in the inner cavity of the middle frame 1, and is connected to the sliding base 2 so as to drive the sliding base 2 to slide relative to the middle frame 1.

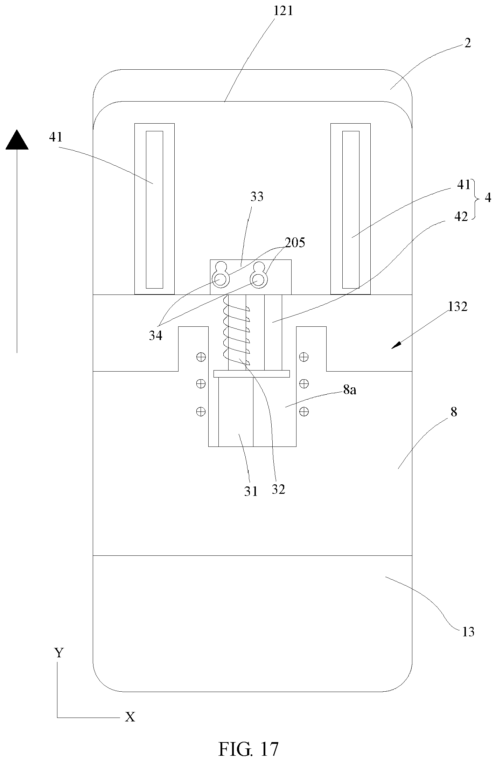

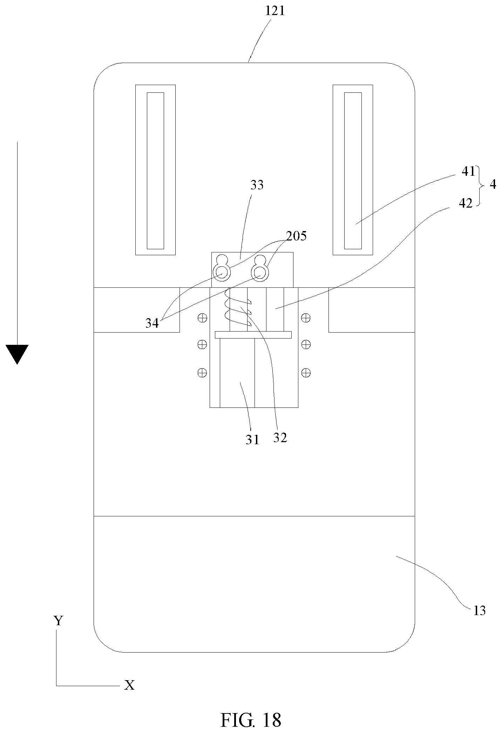

In this embodiment, referring to FIG. 17 and FIG. 18, the driving mechanism 3 specifically includes a motor 31 fixed in the middle frame 1, a driving rod 32, and a transmission block 33; one end of the driving rod 32 is fixedly connected to a rotation shaft of the motor 31, the transmission block 33 is transmittingly connected to the driving rod 32, and the transmission block 33 is connected to the sliding base 2, so that the transmission block 33 drives the sliding base 2 to slide under rotation of the motor 31.

Referring to FIG. 14, FIG. 15, and FIG. 17, the driving manner of the driving mechanism 3 is to convert rotation motion of the motor 31 into linear motion. The driving rod 32 is specifically a screw rod, the transmission block 33 is massive-shaped and has a screw hole matching with the driving rod 32. Rotation of the motor 31 drives the screw rod to slide relative to the transmission block 33 connected to the sliding base 2, so as to realize sliding of the sliding base 2. The driving mechanism 3 transmits smoothly and ensures that the sliding base 2 with a large volume in the present application can slide relative to the middle frame 1 well.

Specifically, referring to FIG. 13 and FIG. 17, the motor 31 is fixed in the inner cavity of the middle frame 1, and the motor 31 is longitudinally placed in the middle frame 1; in other words, a rotation shaft of the motor 31 is parallel to the Y direction of the electronic apparatus 100, the placing manner of the motor 31 ensures that a size of the motor 31 in the X direction is relatively small, which facilitates arrangement of components of the electronic apparatus 100 in the X direction. One end of the driving rod 32 is fixedly connected to the rotation shaft of the motor 31, the transmission block 33 is sheathed on the driving rod 32. Once the motor 31 rotates, the driving rod 32 is driven to rotate; at this time, since the transmission block 33 is connected to the screw rod by screw thread, the transmission block 33 is enabled to move along the Y direction of the electronic apparatus 100, and further drive the sliding base 2 connected with the transmission block 33 to move along the Y direction, such that the sliding base 2 can expose out of or retract into the accommodating groove 124.

In this embodiment, if the rotation direction of the motor 31 varies, the moving direction of the transmission block 33 varies. For example, referring to FIG. 16 and FIG. 17, when the motor 31 rotates forwardly, the transmission block 33 slides towards a direction approaching the top end surface 121 of the middle frame 1, such that the sliding base 2 extends out of the accommodating groove 124; contrarily, the transmission block 33 slides towards a direction being away from the top end surface 121 of the middle frame 1, such that the sliding base 2 retracts into the accommodating groove 124.

The volume of the sliding base 2 is relatively large, and the number of the electronic assemblies 5 received therein is relatively large, the weight of the sliding base 2 is increased to a certain extent, which may cause great effect on stability and accuracy of sliding of the sliding base 2. In the prior art, since the effect of the weight of the sliding base 2 on stability and accuracy of sliding has not been overcome, the sliding base 2 is generally not provided; even if the sliding base 2 is provided, components received in the sliding base 2 is few.

In the present disclosure, in order to overcome the above technical difficulty, the guiding mechanism 4 is innovatively disposed between the sliding base 2 and the middle frame 1, the arrangement of the guiding mechanism 4 can well ensure stability and accuracy of sliding of the sliding base 2 with such a large volume.

Referring to FIG. 16 to FIG. 18, the specific structure of the guiding mechanism 4 includes but is not limited to the following embodiment: the electronic apparatus 100 further comprises a supporting plate 13, the supporting plate 13 matches with the middle frame 1; the guiding mechanism 4 includes at least one sliding rail 41 and a guiding rod 42, the at least one sliding rail 41 is disposed on the supporting plate 13, the sliding base 2 is slidably connected to the at least one sliding rail 41, one end of the guiding rod 42 is fixed in the middle frame 1, a length extending direction of the other end of the guiding rod 42 is identical to a length extending direction of the sliding rail 41, and the other end of the guiding rod 42 slides relative to the sliding base 2.

The guiding mechanism 4 is a combination of the sliding rail 41 and the guiding rod 42. On one hand, the sliding rail 41 can enable the sliding base 2 to slide along a preset direction, so as to ensure sliding accuracy of the sliding base 2; on the other hand, since the volume of the sliding base 2 is relatively large, its size in the X direction is equal to the size of the middle frame 1 in the X direction, the guiding rod 42 can provide supporting and guiding actions for the sliding base 2 during a sliding process; thus, it is ensured that the sliding base 2 can slide stably and accurately relative to the middle frame 1 under action of the guiding mechanism 4, thereby further improving reliability of the electronic apparatus 100.

Specifically, referring to FIG. 16 and FIG. 17, the supporting plate 13 matches with the side frame 12, the supporting plate 13 includes a first supporting surface 131 and a second supporting surface 132 disposed oppositely, the first supporting surface 131 is configured to carry the a display module, the second supporting surface 132 is configured to carry the sliding base 2. The supporting plate 13 and the side frame 12 can be an integrated structure. The supporting plate 13 and the side frame 12 can also be a detachable structure, for example, the supporting plate 13 is fixed on the side frame 12 by manners of screw bolts, riveting connection, etc. In this way, the accommodating groove 124 is located between the supporting plate 13 and the middle plate 11. Correspondingly, a first sliding surface and a second sliding surface of the sliding groove 2 are respectively attached on the supporting plate 13 and the middle plate 11. Correspondingly, the display component 7 can be carried on the supporting plate 13, and the main board 6 (as shown in FIG. 14 and FIG. 15) can also be carried on the supporting plate 13.

Specifically, referring to FIG. 13 and FIG. 17, the supporting plate 13 is provided thereon with two sliding rails 41, the two sliding rails 41 are respectively disposed to be close to the side end surfaces 122 of the middle frame 1. Correspondingly, sliding blocks corresponding to the sliding rails 41 protrudes from the sliding base 2, so that the sliding base 2 can be slidably connected to the sliding rails 41 through the sliding blocks.

Understandably, cross sections of the sliding rails 41 and the sliding blocks are formed as dovetail-shaped.

Understandably, referring to FIG. 15 to FIG. 17, the motor 31 of the driving mechanism 3 is fixed on the supporting plate 13.

Understandably, referring to FIG. 15 to FIG. 17, the specific structure of the guiding rod 42 is shown as follows: the number of the guiding rod 42 is one, the guiding rod 42 is disposed to be adjacent to the driving mechanism 3, and one end of the guiding rod 42 is fixed on the driving mechanism 3.

The guiding rod 42 and the driving mechanism 3 are disposed adjacently, the components are arranged compactly, thereby further reducing sizes of the driving mechanism 3 and the guiding rod 42 in the X direction.

Specifically, referring to FIG. 17 and FIG. 18, one end of the guiding rod 42 is fixed on the motor 31, and the other end of the guiding rod 42 is slidably connected to the transmission block 33. In other words, the guiding rod 42 passes through the transmission block 33; when the transmission block 33 slides correspondingly along rotation of the driving rod 32, the transmission block 33 also slides corresponding to the guiding rod 42. The guiding rod 42 provides an action of supporting the transmission block 33 connected to the sliding base 2, and thus prevents the sliding base 2 from inclining due to uneven forces on the transmission block 33, which may lead to low stability and accuracy of sliding of the sliding base 2, and further result in that the sliding base 2 cannot slide out of or retracted into the accommodating groove 124 conveniently when sliding and may generate collision with a groove wall of the accommodating groove 124. Reliability of the electronic apparatus 100 is improved.

Understandably, the connection relation between the transmission block 33 and the driving rod 32 is specifically that: referring to FIG. 18, the sliding base 2 defines at least one connecting hole 205, the driving mechanism 3 further includes at least one connecting rod 34, one end of the connecting rod 34 is fixed on the transmission block 33, the other end of the connecting rod 34 passes through the connecting hole 205 of the sliding base 2; a central axis of the connecting rod 34 is perpendicular to the supporting plate 13, such that the sliding base 2 slides relative to the connecting rod 34. Of course, in other embodiments, the transmission block 33 and the driving rod 32 have a fixed connection relation. The transmission block 33 is fixedly connected with the sliding base 2 through screw bolts. As such, it is ensured that once the transmission block 33 slides, the sliding base 2 also slides correspondingly.

The connection relation between the sliding base 2 and the driving mechanism 3 ensures that degrees of freedom of the sliding base 2 and the connecting rod 34 in the Z direction of the electronic apparatus 100 are not restricted, thus the sliding base 2 can perform adaptive adjustment in the Z direction during the sliding process, so as to avoid the sliding base 2 from getting stuck with the driving mechanism 3 and being unable to slide during the sliding process, thereby improving reliability of the electronic apparatus 100.

Specifically, referring to FIG. 17, the number of the connecting holes 205 is two, and central axes of the connecting holes 205 are parallel to the Z direction. Correspondingly, referring to FIG. 17, the number of the connecting rods 34 is two. The connecting rods 34 are substantially pins. One end of each connecting rod 34 is fixedly connected on the transmission block 33. The other end of the connecting rod 34 passes through the connecting hole 205. Moreover, the other end of the connecting rod 34 cannot fall out of the connecting hole 205, so as to ensure the connection relation between the sliding base 2 and the transmission block 33. Furthermore, a part of the connecting rod 34 positioned in the connecting hole 205 and the connecting hole 205 form clearance connection, such that the sliding base 2 can slide along the Z direction relative to the transmission block 33, that is, degrees of freedom of the sliding base 2 and the connecting rod 34 in the Z direction of the electronic apparatus 100 are not restricted, thus the sliding base 2 can perform adaptive adjustment in the Z direction during the sliding process, so as to avoid the sliding base 2 from getting stuck with the driving mechanism 3 and being unable to slide during the sliding process, thereby improving reliability of the electronic apparatus 100.

Referring to FIG. 17, a process of switching the electronic apparatus 100 from a retracting state into an extending state is specifically that: the motor 31 rotates, and the screw rod rotates, so as to drive the transmission block 33 to slide along a direction approaching the top end surface 121 of the middle frame 1, and thereby drive the sliding base 2 to gradually extend out of the accommodating groove 124 until being in the extending state; wherein, since the degrees of freedom of the transmission block 33 and the sliding base 2 in the Z direction are not restricted, the sliding base 2 can perform adaptive adjustment.

In this embodiment, the guiding mechanism 4 restricts the sliding base 2 in a preset direction.

Referring to FIG. 18, a process of switching the electronic apparatus 100 from the extending state into the retracting state is specifically that: the motor 31 rotates, and the screw rod rotates, so as to drive the transmission block 33 to slide along a direction being away from the top end surface 121 of the middle frame 1, and thereby drive the sliding base 2 to gradually retract into the accommodating groove 124 until being in the retracting state; wherein, since the degrees of freedom of the transmission block 33 and the sliding base 2 in the Z direction are not restricted, the sliding base 2 can perform adaptive adjustment.

In this embodiment, the guiding mechanism 4 restricts the sliding base 2 in a preset direction.

In the electronic apparatus 100 provided by this embodiment of the present disclosure, multiple electronic assemblies 5 are disposed in the sliding base 2, and the sliding base 2 can slide relative to the middle frame 1. When the multiple electronic assemblies 5 are required to be used, by driving the sliding base 2 to slide out of the middle frame 1 using the driving mechanism 3, it can be achieved that the functional parts are enabled to slide out relative to the middle frame 1 to transmit signals; that is, it is not required to dispose the functional parts corresponding to the electronic assemblies 5 on the display screen of the electronic apparatus 100, which is conducive to improve the screen-to-body ratio of the electronic apparatus 100; furthermore, the guiding mechanism 4 can enable the sliding base 2 is kept moving on a preset trace when sliding relative to the middle frame 1, thereby ensuring accuracy and stability of the sliding base 2 when sliding.

Moreover, in the electronic apparatus 100 provided by this embodiment of the present disclosure the depth device 522, the camera 523, and the projector 524 are respectively disposed on the first connecting part 5212 and the second connecting part 5213 of the support 521, the connecting part 5211 located between the first fixing part 5212 and the second fixing part 5213 is configured to dispose the first functional component, and multiple components are all mounted on the support 521; when mounting the imaging assembly 52, it is only required to mount the imaging assembly 52 on a component requiring being mounted and thus mounting of the above multiple components can be realized, thereby improving mounting efficiency.

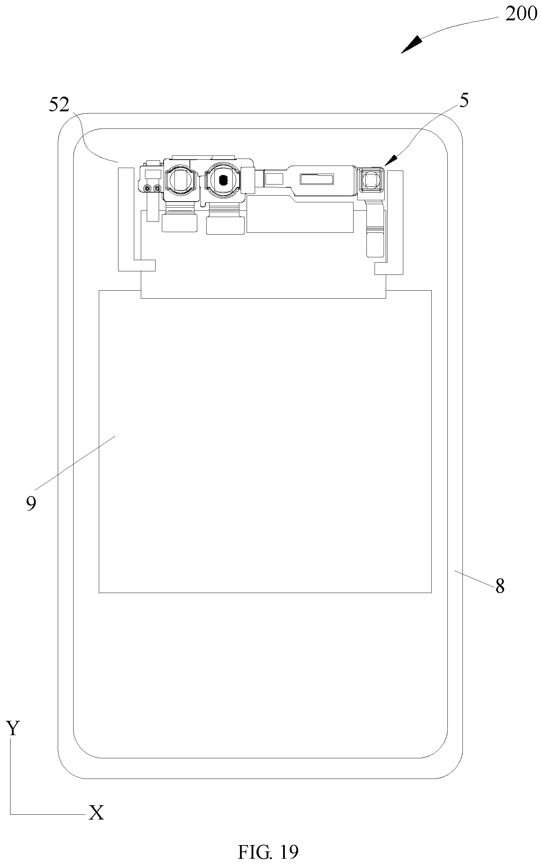

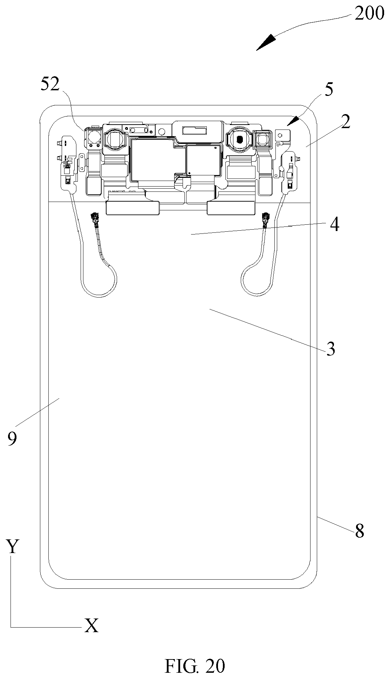

Referring to FIG. 19 and FIG. 20, another electronic apparatus 200 provided by an embodiment of the present disclosure comprises a casing 8, a display module 9, and the electronic assembly 5; the display module 9 covers on the casing 8, the electronic assembly 5 is disposed inside the casing 8, and the imaging assembly 52 faces to the display module 9 to capture images.

The electronic assembly 5 of the electronic apparatus 200 provided by this embodiment of the present disclosure is substantially identical to that of the electronic apparatus 100 provided by the embodiment I of the present disclosure, while the main difference is that: the electronic assembly 5 provided by this embodiment of the present disclosure is fixed in the electronic apparatus 200, while the electronic assembly 5 of the electronic apparatus 200 provided by the embodiment I of the present disclosure can slide.

Understandably, the structure of the electronic assembly 5 in this embodiment of the present disclosure can refer to the structure of the electronic assembly 5 mentioned in the embodiment I of the present disclosure, and is not repeated here.

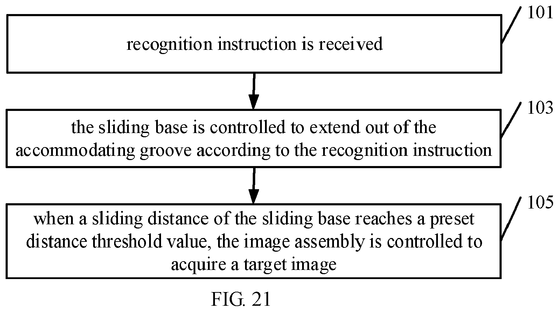

Referring to FIG. 21, one embodiment of the present disclosure provides a method for controlling an electronic apparatus, the method can, but is not limited to, be applied in the electronic apparatus provided by the embodiment I of the present disclosure. Specifically, the electronic apparatus mainly comprises a middle frame, a sliding base, and an imaging assembly received in the sliding base; the middle frame defines an accommodating groove, the sliding base is slidably connected in the accommodating groove, and the imaging assembly includes a depth device, a camera, and a projector.

The method for controlling an electronic apparatus provided by this embodiment of the present disclosure comprises the following operations.

101: recognition instruction is received.

Specifically, the recognition instruction can be input through interactive manners such as voices, brain waves, and so on between a user and the electronic apparatus.

103: the sliding base is controlled to extend out of the accommodating groove according to the recognition instruction.

Specifically, the sliding base is controlled to slide for a preset distance relative to the accommodating groove, such that the imaging assembly is not blocked and thus can perform signal transmission with the outside.

105: when a sliding distance of the sliding base reaches a preset distance threshold value, the image assembly is controlled to acquire a target image.

Specifically, when a sliding distance of the sliding base reaches a preset distance threshold value, the projector is used to emit specifically modulated infrared light to a photographed subject; the depth device receives infrared light reflected by the photographed subject, and acquires spatial information of the photographed subject through calculation; the camera is used to perform color image photographing for the photographed subject; image information captured by the depth device and the camera can be transmitted to the image processing chip, the image processing chip can gather the depth image information and the color image information and acquire a target image through algorithm processing, the target image can be a color image with information.

In this embodiment, when the depth device and the camera perform image information capturing for the photographed subject, image information of the two may overlap, this is defined as image overlapping region information. The image processing chip performs processing for the image overlapping region information to generate the color image with information for recognition.

In the method for controlling an electronic apparatus provided by this embodiment of the present disclosure, after inputting the recognition instruction, the sliding base can be controlled to slide and reach the preset distance threshold value, and thus the imaging assembly is controlled to acquire target images. The automation extent is high, and users' experience is improved.

The above are implementation manners of embodiments of the present disclosure. It should be noted that for one of ordinary skill in the art, various improvements and embellishments can also be made without departing from the principle of embodiments of the present disclosure.

## Claims

1. A camera assembly (52) comprising a support (521), a depth device (522), a camera (523), and a projector (524); wherein, the depth device (522), the camera (523), and the projector (524) are all disposed on the support (521), the depth device (522) is spaced from the projector (524), a region of the support (521) between the depth device (522) and the projector (524) is capable of being configured to dispose a first functional component, the projector (524) is configured to project light, the depth device (522) is configured to capture depth image information, and the camera (523) is configured to capture color image information; the support (521) has a connecting part (5211), a first fixing part (5212), and a second fixing part (5213); the connecting part (5211) is configured to dispose the first functional component, the first fixing part (5212) and the second fixing part (5213) are respectively located at two opposite sides of the connecting part (5211), both the depth device (522) and the camera (523) are fixed on the first fixing part (5212), and the projector (524) is fixed on the second fixing part (5213);
wherein the first fixing part (5212) and the second fixing part (5213) respectively have a first protrusion (52120) and a second protrusion (52130), the first protrusion (52120) and the second protrusion (52130) protrude relative to the connecting part (5211), the first protrusion (52120) and the second protrusion (52130) are located at the same side of the connecting part (5211), such that the connecting part (5211) is recessed inwards relative to the first fixing part (5212) and the second fixing part (5213), the first protrusion (52120), the connecting part (5211), and the second protrusion (52130) hereby form an avoidance region (52110), the avoidance region (52110) is configured to accommodate a second functional component.

2. The camera assembly (52) according to claim 1, wherein, the depth device (522) or the camera (523) is spaced from the projector (524) by a spaced distance that is long enough to prevent light crosstalk from being generated between the depth device (522) or the camera (523) and the projector (524), and a region of the support (521) in the spaced distance is configured to dispose the first functional component.

3. The camera assembly (52) according to claim 2, further comprising a fill-in light (525), the fill-in light (525) is fixed on the support (521), and the fill-in light (525) and the depth device (522) are disposed adjacently.

4. The camera assembly (52) according to claim 1, wherein, the first fixing part (5211) comprises a first fixing plate (52121) and a first ring protrusion (52122), the first fixing part (5211) defines a first hollow portion (52101) and a second hollow portion (52102) disposed spacedly, the first ring protrusion (52122) protrudes from the first fixing plate (52121), an inner cavity of the first ring protrusion (52122) communicates with the first hollow portion (52101) and the second hollow portion (52102) respectively, the depth device (522) and the camera (523) are accommodated in the inner cavity of the first ring protrusion (52122), the depth device (522) captures depth image information through the first hollow portion (52101), and the camera (523) captures color image information through the second hollow portion (52102).

5. The camera assembly (52) according to claim 1, wherein, the first fixing part (5211) comprises a second fixing plate (52131), a second ring protrusion (52132), and a third ring protrusion (52134), the second fixing plate (52313) defines a third hollow portion (52103) and a fourth hollow portion (52104) disposed spacedly, the second ring protrusion (52132) and the third ring protrusion (52134) spacedly protrude from the second fixing plate (52131), and inner cavities of the second ring protrusion (52132) and of the third ring protrusion (52134) communicate with the third hollow portion (52103) and the fourth hollow portion (52104) respectively; the depth device (522) and the camera (523) are accommodated in the inner cavities of the second ring protrusion (52132) and of the third ring protrusion (52134) respectively, the depth device (522) captures color image information through the third hollow portion (52103), and the camera (523) captures color image information through the fourth hollow portion (52104).

6. The camera (52) according to claim 4, wherein, the second fixing part (5213) has a third fixing plate (52133) and a fourth ring protrusion (52135), the third fixing plate (52133) defines a fifth hollow portion (52105), the fourth ring protrusion (52135) protrudes from the third fixing plate (52133), an inner cavity of the fourth ring protrusion (52135) communicates with the fifth hollow portion (52105), the projector (524) is accommodated in the inner cavity of the fourth ring protrusion (52135), and the projector (524) projects through the fifth hollow portion (52105).

7. The camera assembly (52) according to claim 1, wherein, the support (521) has a connecting part (5211), a first fixing part (5212), and a second fixing part (5213), the connecting part (5211) is configured to dispose a first functional component, the first fixing part (5212) and the second fixing part (5213) are respectively located at two opposite sides of the connecting part (5211); the depth device (522) is fixed on the first fixing part (5212), and the camera (523) and the projector (524) are adjacently disposed on the second fixing part (5213).

8. The camera assembly according to claim 7, wherein, the first fixing part comprises a first fixing plate (52121) and a first ring protrusion (52122), the first fixing plate (52121) defines a first hollow portion (52101), the first ring protrusion (52122) protrudes from the first fixing plate (52121), an inner cavity of the first ring protrusion (52122) communicates with the first hollow portion (52101), the depth device (522) is accommodated in the inner cavity of the first ring protrusion (52122), and the depth device (522) captures depth image information through the first hollow portion (52101).

9. The camera assembly (52) according to claim 8, wherein, the second fixing part (5213) comprises a second fixing plate (52131) and a second ring protrusion (52132), the second fixing plate (52131) defines a second hollow portion (52102) and a third hollow portion (52103) disposed spacedly, the second ring protrusion (52132) protrudes from the second fixing plate (52131), and an inner cavity of the second ring protrusion (52132) communicates with the second hollow portion (52102) and the third hollow portion (52103) respectively; the camera (523) and the projector (524) are accommodated in the inner cavity of the second ring protrusion (52132), the camera (523) captures color image information through the second hollow portion (52102), and the projector (524) projects through the third hollow portion (52103).

10. The camera assembly (52) according to claim 8, wherein, the second fixing part (5213) comprises a third fixing plate (52133), a third ring protrusion (52134), and a fourth ring protrusion (52135), the third fixing plate (52133) defines a fourth hollow portion (52104) and a fifth hollow portion (52105) disposed spacedly, the third ring protrusion (52134) and the fourth ring protrusion (52135) spacedly protrude from the third fixing plate (52133), and inner cavities of the third ring protrusion (52134) and of the fourth ring protrusion (52135) communicate with the fourth hollow portion (52104) and the fifth hollow portion (52105) respectively; the camera (523) and the projector (524) are accommodated in the inner cavities of the third ring protrusion (52134) and of the fourth ring protrusion (52135) respectively, the camera (523) captures color image information through the fourth hollow portion (52104), and the projector (524) projects through the fifth hollow portion (52105).

11. The camera assembly (52) according to any one of claims 7-10, wherein, the support (521) further has a third fixing part (5214), the third fixing part (5214) and the first fixing part (5212) are disposed adjacently, and the first fixing part (5212) is located between the connecting part (5211) and the third fixing part (5214); the camera assembly (52) further comprises a fill-in light (525), the fill-in light (525) is fixed on the third fixing part (5214), and the fill-in light (525) is configured to reinforce light for the depth device (522).

12. An electronic apparatus (100) comprising a middle frame (1), a sliding base (2), a guiding mechanism (4), a driving mechanism (3), and a camera assembly (52) according to any one of claims 1-11 received in the sliding base (2); wherein, the middle frame (1) defines an accommodating groove (124); the sliding base (2) is slidably connected with the middle frame (1) in the accommodating groove (124) via the driving mechanism (3), the guiding mechanism (4) is disposed between the sliding base (2) and the middle frame (1), so that the sliding base (2) extends out of or is received into the accommodating groove (124) along a direction guided by the guiding mechanism (4) under drive of the driving mechanism (3); the sliding base (2) is provided with a first functional part (2201), a second functional part (2202), and a third functional part (2203), the depth device (522) captures the depth image information through the first functional part (2201), the camera (523) captures the color image information through the second functional part (2202), and the projector (524) projects through the third functional part (2203).

13. The electronic apparatus (100) according to claim 12, wherein, the sliding base (2) comprises a sliding frame (21), a first sliding plate (22), and a second sliding plate (23); the sliding frame (21) is made of conductive material, the first sliding plate (22) and the second sliding plate (23) cover on two sides of the sliding frame (21) respectively to form an inner cavity of the sliding base (2) accommodating a plurality of functional components; the first sliding plate (22) and the second sliding plate (23) are made of transparent material.

## Patentansprüche

1. Kameraanordnung (52), umfassend einen Träger (521), eine Tiefenvorrichtung (522), eine Kamera (523) und einen Projektor (524); wobei die Tiefenvorrichtung (522), die Kamera (523) und der Projektor (524) alle auf dem Träger (521) angeordnet sind, die Tiefenvorrichtung (522) vom Projektor (524) beabstandet ist, ein Bereich des Trägers (521) zwischen der Tiefenvorrichtung (522) und dem Projektor (524) sich konfigurieren lässt, um eine erste Funktionskomponente anzuordnen, der Projektor (524) konfiguriert ist, um Licht zu projizieren, die Tiefenvorrichtung (522) konfiguriert ist, um eine Tiefenbildinformation zu erfassen, und die Kamera (523) konfiguriert ist, um eine Farbbildinformation zu erfassen; wobei der Träger (521) ein Verbindungsteil (5211), ein erstes Befestigungsteil (5212) und ein zweites Befestigungsteil (5213) aufweist; wobei das Verbindungsteil (5211) zur Anordnung der ersten Funktionskomponente ausgebildet ist, das erste Befestigungsteil (5212) und das zweite Befestigungsteil (5213) jeweils an zwei gegenüberliegenden Seiten des Verbindungsteils (5211) angeordnet sind, sowohl die Tiefenvorrichtung (522) als auch die Kamera (523) am ersten Befestigungsteil (5212) befestigt sind und der Projektor (524) am zweiten Befestigungsteil (5213) befestigt ist;
wobei das erste Befestigungsteil (5212) und das zweite Befestigungsteil (5213) jeweils einen ersten Vorsprung (52120) und einen zweiten Vorsprung (52130) aufweisen, wobei der erste Vorsprung (52120) und der zweite Vorsprung (52130) relativ zum Verbindungsteil (5211) hervorstehen, der erste Vorsprung (52120) und der zweite Vorsprung (52130) auf der gleichen Seite des Verbindungsteils (5211) liegen, sodass das Verbindungsteil (5211) gegenüber dem ersten Befestigungsteil (5212) und dem zweiten Befestigungsteil (5213) nach innen zurückversetzt ist, der erste Vorsprung (52120), das Verbindungsteil (5211) und der zweite Vorsprung (52130) hierdurch einen Ausweichbereich (52110) bilden, wobei der Ausweichbereich (52110) konfiguriert ist, um eine zweite Funktionskomponente aufzunehmen.

2. Kameraanordnung (52) nach Anspruch 1, wobei die Tiefenvorrichtung (522) oder die Kamera (523) von dem Projektor (524) in einem räumlichen Abstand beabstandet ist, der lang genug ist, um zu verhindern, dass Lichtübersprechen zwischen der Tiefenvorrichtung (522) oder der Kamera (523) und dem Projektor (524) erzeugt wird, und ein Bereich des Trägers (521) in dem räumlichen Abstand konfiguriert ist, um die erste Funktionskomponente anzuordnen.

3. Kameraanordnung (52) nach Anspruch 2, ferner umfassend ein Aufhelllicht (525), wobei das Aufhelllicht (525) am Träger (521) befestigt ist und das Aufhelllicht (525) und die Tiefenvorrichtung (522) nebeneinander angeordnet sind.

4. Kameraanordnung (52) nach Anspruch 1, wobei das erste Befestigungsteil (5211) eine erste Befestigungsplatte (52121) und einen ersten Ringvorsprung (52122) umfasst, das erste Befestigungsteil (5211) einen ersten hohlen Abschnitt (52101) und einen zweiten hohlen Abschnitt (52102) definiert, die beabstandet angeordnet sind, der erste Ringvorsprung (52122) von der ersten Befestigungsplatte (52121) hervorsteht, ein innerer Hohlraum des ersten Ringvorsprungs (52122) jeweils mit dem ersten hohlen Abschnitt (52101) und dem zweiten hohlen Abschnitt (52102) verbunden ist, die Tiefenvorrichtung (522) und die Kamera (523) im inneren Hohlraum des ersten Ringvorsprungs (52122) aufgenommen sind, die Tiefenvorrichtung (522) die Tiefenbildinformation durch den ersten hohlen Abschnitt (52101) erfasst und die Kamera (523) die Farbbildinformation durch den zweiten hohlen Abschnitt (52102) erfasst.

5. Kameraanordnung (52) nach Anspruch 1, wobei das erste Befestigungsteil (5211) eine zweite Befestigungsplatte (52131), einen zweiten Ringvorsprung (52132) und einen dritten Ringvorsprung (52134) umfasst, die zweite Befestigungsplatte (52313) einen dritten hohlen Abschnitt (52103) und einen vierten hohlen Abschnitt (52104) definiert, die beabstandet angeordnet sind, der zweite Ringvorsprung (52132) und der dritte Ringvorsprung (52134) beabstandet von der zweiten Befestigungsplatte (52131) hervorstehen und innere Hohlräume des zweiten Ringvorsprungs (52132) und des dritten Ringvorsprungs (52134) jeweils mit dem dritten hohlen Abschnitt (52103) und dem vierten hohlen Abschnitt (52104) verbunden sind; wobei die Tiefenvorrichtung (522) und die Kamera (523) jeweils in den inneren Hohlräumen des zweiten Ringvorsprungs (52132) und des dritten Ringvorsprungs (52134) aufgenommen sind, die Tiefenvorrichtung (522) die Farbbildinformation durch den dritten hohlen Abschnitt (52103) erfasst und die Kamera (523) die Farbbildinformation durch den vierten hohlen Abschnitt (52104) erfasst.

6. Kamera (52) nach Anspruch 4, wobei das zweite Befestigungsteil (5213) eine dritte Befestigungsplatte (52133) und einen vierten Ringvorsprung (52135) aufweist, die dritte Befestigungsplatte (52133) einen fünften hohlen Abschnitt (52105) definiert, der vierte Ringvorsprung (52135) aus der dritten Befestigungsplatte (52133) hervorsteht, ein innerer Hohlraum des vierten Ringvorsprungs (52135) mit dem fünften hohlen Abschnitt (52105) verbunden ist, der Projektor (524) im inneren Hohlraum des vierten Ringvorsprungs (52135) aufgenommen ist und der Projektor (524) durch den fünften hohlen Abschnitt (52105) projiziert.

7. Kameraanordnung (52) nach Anspruch 1, wobei der Träger (521) ein Verbindungsteil (5211), ein erstes Befestigungsteil (5212) und ein zweites Befestigungsteil (5213) aufweist, das Verbindungsteil (5211) konfiguriert ist, um eine erste Funktionskomponente anzuordnen, das erste Befestigungsteil (5212) und das zweite Befestigungsteil (5213) jeweils an zwei gegenüberliegenden Seiten des Verbindungsteils (5211) angeordnet sind; wobei die Tiefenvorrichtung (522) am ersten Befestigungsteil (5212) befestigt ist und die Kamera (523) und der Projektor (524) nebeneinander am zweiten Befestigungsteil (5213) angeordnet sind.

8. Kameraanordnung nach Anspruch 7, wobei das erste Befestigungsteil eine erste Befestigungsplatte (52121) und einen ersten Ringvorsprung (52122) aufweist, die erste Befestigungsplatte (52121) einen ersten hohlen Abschnitt (52101) definiert, der erste Ringvorsprung (52122) aus der ersten Befestigungsplatte (52121) hervorsteht, ein innerer Hohlraum des ersten Ringvorsprungs (52122) mit dem ersten hohlen Abschnitt (52101) verbunden ist, die Tiefenvorrichtung (522) im inneren Hohlraum des ersten Ringvorsprungs (52122) aufgenommen ist und die Tiefenvorrichtung (522) die Tiefenbildinformation durch den ersten hohlen Abschnitt (52101) erfasst.

9. Kameraanordnung (52) nach Anspruch 8, wobei das zweite Befestigungsteil (5213) eine zweite Befestigungsplatte (52131) und einen zweiten Ringvorsprung (52132) umfasst, die zweite Befestigungsplatte (52131) einen zweiten hohlen Abschnitt (52102) und einen dritten hohlen Abschnitt (52103) definiert, die beabstandet angeordnet sind, der zweite Ringvorsprung (52132) von der zweiten Befestigungsplatte (52131) hervorsteht und ein innerer Hohlraum des zweiten Ringvorsprungs (52132) jeweils mit dem zweiten hohlen Abschnitt (52102) und dem dritten hohlen Abschnitt (52103) verbunden ist; wobei die Kamera (523) und der Projektor (524) im inneren Hohlraum des zweiten Ringvorsprungs (52132) aufgenommen sind, die Kamera (523) die Farbbildinformation durch den zweiten hohlen Abschnitt (52102) erfasst und der Projektor (524) durch den dritten hohlen Abschnitt (52103) projiziert.

10. Kameraanordnung (52) nach Anspruch 8, wobei das zweite Befestigungsteil (5213) eine dritte Befestigungsplatte (52133), einen dritten Ringvorsprung (52134) und einen vierten Ringvorsprung (52135) umfasst, die dritte Befestigungsplatte (52133) einen vierten hohlen Abschnitt (52104) und einen fünften hohlen Abschnitt (52105) definiert, die beabstandet angeordnet sind, der dritte Ringvorsprung (52134) und der vierte Ringvorsprung (52135) beabstandet von der dritten Befestigungsplatte (52133) hervorstehen, und innere Hohlräume des dritten Ringvorsprungs (52134) und des vierten Ringvorsprungs (52135) jeweils mit dem vierten hohlen Abschnitt (52104) und dem fünften hohlen Abschnitt (52105) verbunden sind; wobei die Kamera (523) und der Projektor (524) jeweils in den inneren Hohlräumen des dritten Ringvorsprungs (52134) und des vierten Ringvorsprungs (52135) aufgenommen sind, die Kamera (523) die Farbbildinformation durch den vierten hohlen Abschnitt (52104) erfasst und der Projektor (524) durch den fünften hohlen Abschnitt (52105) projiziert.

11. Kameraanordnung (52) nach einem der Ansprüche 7 bis 10, wobei der Träger (521) ferner ein drittes Befestigungsteil (5214) aufweist, das dritte Befestigungsteil (5214) und das erste Befestigungsteil (5212) benachbart angeordnet sind und das erste Befestigungsteil (5212) zwischen dem Verbindungsteil (5211) und dem dritten Befestigungsteil (5214) liegt; wobei die Kameraanordnung (52) ferner ein Aufhelllicht (525) umfasst, das Aufhelllicht (525) am dritten Befestigungsteil (5214) befestigt ist und das Aufhelllicht (525) konfiguriert ist, um das Licht für die Tiefenvorrichtung (522) zu verstärken.

12. Elektronische Vorrichtung (100), umfassend einen Mittelrahmen (1), einen Schiebeboden (2), einen Führungsmechanismus (4), einen Antriebsmechanismus (3) und eine Kameraanordnung (52) nach einem der Ansprüche 1 bis 11, die in dem Schiebeboden (2) aufgenommen ist, wobei der Mittelrahmen (1) eine Aufnahmenut (124) definiert; wobei der Schiebeboden (2) über den Antriebsmechanismus (3) in der Aufnahmenut (124) verschiebbar mit dem Mittelrahmen (1) verbunden ist, der Führungsmechanismus (4) zwischen dem Schiebeboden (2) und dem Mittelrahmen (1) angeordnet ist, sodass sich der Schiebeboden (2) entlang einer durch den Führungsmechanismus (4) geführten Richtung unter Antrieb des Antriebsmechanismus (3) aus der Aufnahmenut (124) heraus erstreckt oder in dieser aufgenommen wird; wobei der Schiebeboden (2) mit einem ersten Funktionsteil (2201), einem zweiten Funktionsteil (2202) und einem dritten Funktionsteil (2203) bereitgestellt wird, die Tiefenvorrichtung (522) die Tiefenbildinformation durch das erste Funktionsteil (2201) erfasst, die Kamera (523) die Farbbildinformation durch das zweite Funktionsteil (2202) erfasst und der Projektor (524) durch das dritte Funktionsteil (2203) projiziert.

13. Elektronische Vorrichtung (100) nach Anspruch 12, wobei der Schiebeboden (2) einen Schieberahmen (21), eine erste Schiebeplatte (22) und eine zweite Schiebeplatte (23) umfasst; wobei der Schieberahmen (21) aus leitfähigem Material besteht, die erste Schiebeplatte (22) und die zweite Schiebeplatte (23) jeweils zwei Seiten des Schieberahmens (21) abdecken, um einen inneren Hohlraum des Schiebebodens (2) zu bilden und eine Vielzahl von Funktionskomponenten aufnehmen; wobei die erste Schiebeplatte (22) und die zweite Schiebeplatte (23) aus transparentem Material bestehen.

## Revendications

1. Ensemble caméra (52) comprenant un support (521), un dispositif de profondeur (522), une caméra (523) et un projecteur (524) ; dans lequel le dispositif de profondeur (522), la caméra (523) et le projecteur (524) sont tous disposés sur le support (521), le dispositif de profondeur (522) est espacé du projecteur (524), une région du support (521) entre le dispositif de profondeur (522) et le projecteur (524) peut être configurée pour disposer un premier composant fonctionnel, le projecteur (524) est configuré pour projeter de la lumière, le dispositif de profondeur (522) est configuré pour capturer des informations d'image de profondeur, et la caméra (523) est configurée pour capturer des informations d'image en couleur ; le support (521) comporte une pièce de liaison (5211), une première pièce de fixation (5212) et une deuxième pièce de fixation (5213) ; la pièce de liaison (5211) est configurée pour disposer le premier composant fonctionnel, la première pièce de fixation (5212) et la deuxième pièce de fixation (5213) sont respectivement situées sur deux côtés opposés de la pièce de liaison (5211), le dispositif de profondeur (522) et la caméra (523) sont tous deux fixés sur la première pièce de fixation (5212), et le projecteur (524) est fixé à la deuxième pièce de fixation (5213) ;
dans lequel la première pièce de fixation (5212) et la deuxième pièce de fixation (5213) présentent respectivement une première protubérance (52120) et une deuxième protubérance (52130), la première protubérance (52120) et la deuxième protubérance (52130) font saillie par rapport à la pièce de liaison (5211), la première protubérance (52120) et la deuxième protubérance (52130) sont situées du même côté par rapport à la pièce de liaison (5211), de telle sorte que la pièce de liaison (5211) soit en retrait vers l'intérieur par rapport à la première pièce de fixation (5212) et à la deuxième pièce de fixation (5213), la première protubérance (52120), la pièce de liaison (5211) et la deuxième protubérance (52130) forment ainsi une zone d'évitement (52110), la zone d'évitement (52110) étant configurée pour loger un deuxième composant fonctionnel.

2. Ensemble caméra (52) selon la revendication 1, dans lequel le dispositif de profondeur (522) ou la caméra (523) est espacé du projecteur (524) d'une distance d'espacement qui est suffisamment grande pour empêcher la génération d'une diaphonie lumineuse entre le dispositif de profondeur (522) ou la caméra (523) et le projecteur (524), et une région du support (521) correspondant à la distance d'espacement est configurée pour disposer le premier composant fonctionnel.

3. Ensemble caméra (52) selon la revendication 2, comprenant en outre une lampe d'appoint (525), la lampe d'appoint (525) est fixée au support (521), et la lampe d'appoint (525) et le dispositif de profondeur (522) sont disposés de manière adjacente.

4. Ensemble caméra (52) selon la revendication 1, dans lequel la première pièce de fixation (5211) comprend une première plaque de fixation (52121) et une première protubérance annulaire (52122), la première pièce de fixation (5211) définit une première partie creuse (52101) et une deuxième partie creuse (52102) disposées de manière espacée, la première protubérance annulaire (52122) fait saillie par rapport à la première plaque de fixation (52121), une cavité intérieure de la première protubérance annulaire (52122) communique respectivement avec la première partie creuse (52101) et la deuxième partie creuse (52102), le dispositif de profondeur (522) et la caméra (523) sont logés dans la cavité intérieure de la première protubérance annulaire (52122), le dispositif de profondeur (522) capture des informations d'image de profondeur par l'intermédiaire de la première partie creuse (52101), et la caméra (523) capture des informations d'image en couleur par l'intermédiaire de la deuxième partie creuse (52102).

5. Ensemble caméra (52) selon la revendication 1, dans lequel la première pièce de fixation (5211) comprend une deuxième plaque de fixation (52131), une deuxième protubérance annulaire (52132) et une troisième protubérance annulaire (52134), la deuxième plaque de fixation (52313) définit une troisième partie creuse (52103) et une quatrième partie creuse (52104) disposées de manière espacée, la deuxième protubérance annulaire (52132) et la troisième protubérance annulaire (52134) font saillie de manière espacée par rapport à la deuxième plaque de fixation (52131), et les cavités intérieures de la deuxième protubérance annulaire (52132) et de la troisième protubérance annulaire (52134) communiquent respectivement avec la troisième partie creuse (52103) et la quatrième partie creuse (52104) ; le dispositif de profondeur (522) et la caméra (523) sont respectivement logés dans les cavités intérieures de la deuxième protubérance annulaire (52132) et de la troisième protubérance annulaire (52134), le dispositif de profondeur (522) capture des informations d'image en couleur par l'intermédiaire de la troisième partie creuse (52103), et la caméra (523) capture des informations d'image en couleur par l'intermédiaire de la quatrième partie creuse (52104).

6. Caméra (52) selon la revendication 4, dans laquelle la deuxième pièce de fixation (5213) comporte une troisième plaque de fixation (52133) et une quatrième protubérance annulaire (52135), la troisième plaque de fixation (52133) définit une cinquième partie creuse (52105), la quatrième protubérance annulaire (52135) fait saillie par rapport à la troisième plaque de fixation (52133), une cavité intérieure de la quatrième protubérance annulaire (52135) communique avec la cinquième partie creuse (52105), le projecteur (524) est logé dans la cavité intérieure de la quatrième protubérance annulaire (52135), et le projecteur (524) projette à travers la cinquième partie creuse (52105).

7. Ensemble caméra (52) selon la revendication 1, dans lequel le support (521) comporte une pièce de liaison (5211), une première pièce de fixation (5212) et une deuxième pièce de fixation (5213), la pièce de liaison (5211) est configurée pour disposer un premier composant fonctionnel, la première pièce de fixation (5212) et la deuxième pièce de fixation (5213) sont respectivement situées sur deux côtés opposés de la pièce de liaison (5211) ; le dispositif de profondeur (522) est fixé à la première pièce de fixation (5212), et la caméra (523) et le projecteur (524) sont disposés de manière adjacente sur la deuxième pièce de fixation (5213).

8. Ensemble caméra selon la revendication 7, dans lequel la première pièce de fixation comprend une première plaque de fixation (52121) et une première protubérance annulaire (52122), la première plaque de fixation (52121) définit une première partie creuse (52101), la première protubérance annulaire (52122) fait saillie par rapport à la première plaque de fixation (52121), une cavité intérieure de la première protubérance annulaire (52122) communique avec la première partie creuse (52101), le dispositif de profondeur (522) est logé dans la cavité intérieure de la première protubérance annulaire (52122), et le dispositif de profondeur (522) capture des informations d'image de profondeur par l'intermédiaire de la première partie creuse (52101).

9. Ensemble caméra (52) selon la revendication 8, dans lequel la deuxième pièce de fixation (5213) comprend une deuxième plaque de fixation (52131) et une deuxième protubérance annulaire (52132), la deuxième plaque de fixation (52131) définit une deuxième partie creuse (52102) et une troisième partie creuse (52103) disposées de manière espacée, la deuxième protubérance annulaire (52132) fait saillie par rapport à la deuxième plaque de fixation (52131), et une cavité intérieure de la deuxième protubérance annulaire (52132) communique respectivement avec la deuxième partie creuse (52102) et la troisième partie creuse (52103) ; la caméra (523) et le projecteur (524) sont logés dans la cavité intérieure de la deuxième protubérance annulaire (52132), la caméra (523) capture des informations d'image en couleur par l'intermédiaire de la deuxième partie creuse (52102), et le projecteur (524) projette à travers la troisième partie creuse (52103) .

10. Ensemble caméra (52) selon la revendication 8, dans lequel la deuxième pièce de fixation (5213) comprend une troisième plaque de fixation (52133), une troisième protubérance annulaire (52134) et une quatrième protubérance annulaire (52135), la troisième plaque de fixation (52133) définit une quatrième partie creuse (52104) et une cinquième partie creuse (52105) disposées de manière espacée, la troisième protubérance annulaire (52134) et la quatrième protubérance annulaire (52135) font saillie de manière espacée par rapport à la troisième plaque de fixation (52133), et les cavités intérieures de la troisième protubérance annulaire (52134) et de la quatrième protubérance annulaire (52135) communiquent respectivement avec la quatrième partie creuse (52104) et la cinquième partie creuse (52105) ; la caméra (523) et le projecteur (524) sont respectivement logés dans les cavités intérieures de la troisième protubérance annulaire (52134) et de la quatrième protubérance annulaire (52135), la caméra (523) capture des informations d'image en couleur par l'intermédiaire de la quatrième partie creuse (52104), et le projecteur (524) projette à travers la cinquième partie creuse (52105).

11. Ensemble caméra (52) selon l'une quelconque des revendications 7-10, dans lequel le support (521) comporte en outre une troisième pièce de fixation (5214), la troisième pièce de fixation (5214) et la première pièce de fixation (5212) sont disposées de manière adjacente, et la première pièce de fixation (5212) est située entre la pièce de liaison (5211) et la troisième pièce de fixation (5214) ; l'ensemble caméra (52) comprend en outre une lampe d'appoint (525), la lampe d'appoint (525) est fixée à la troisième pièce de fixation (5214), et la lampe d'appoint (525) est configurée pour renforcer la lumière destinée au dispositif de profondeur (522).

12. Appareil électronique (100) comprenant un cadre central (1), une base coulissante (2), un mécanisme de guidage (4), un mécanisme d'entraînement (3) et une caméra (52) selon l'une quelconque des revendications 1-11, reçue dans la base coulissante (2) ; dans lequel le cadre central (1) définit une rainure de logement (124) ; la base coulissante (2) est reliée de manière coulissante au cadre central (1) dans la rainure de logement (124) par l'intermédiaire du mécanisme d'entraînement (3), le mécanisme de guidage (4) est disposé entre la base coulissante (2) et le cadre central (1) de manière à ce que la base coulissante (2) sorte de la rainure de logement (124) ou y soit reçue selon une direction guidée par le mécanisme de guidage (4) sous l'action du mécanisme d'entraînement (3) ; la base coulissante (2) est pourvue d'une première partie fonctionnelle (2201), d'une deuxième partie fonctionnelle (2202) et d'une troisième partie fonctionnelle (2203), le dispositif de profondeur (522) capture les informations d'image de profondeur par l'intermédiaire de la première partie fonctionnelle (2201), la caméra (523) capture les informations d'image en couleur par l'intermédiaire de la deuxième partie fonctionnelle (2202), et le projecteur (524) projette à travers la troisième partie fonctionnelle (2203).

13. Appareil électronique (100) selon la revendication 12, dans lequel la base coulissante (2) comprend un cadre coulissant (21), une première plaque coulissante (22) et une deuxième plaque coulissante (23) ; le cadre coulissant (21) est constitué d'un matériau conducteur, la première plaque coulissante (22) et la deuxième plaque coulissante (23) recouvrent respectivement deux côtés du cadre coulissant (21) pour former une cavité intérieure de la base coulissante (2) logeant une pluralité de composants fonctionnels ; et la première plaque coulissante (22) et la deuxième plaque coulissante (23) sont constituées d'un matériau transparent.
